# EUROPEAN PATENT APPLICATION

(11) **EP 3 297 191 A1**
(43) Date of publication of application: **21.03.2018**
(21) Application number: 15897933.6
(22) Date of filing: 10.07.2015
(51) Int. Cl.: H04L 1/00

(54) **PROTOCOL FRAME TRANSMISSION METHOD, DEVICE, NODE APPARATUS AND SYSTEM**

(71) Applicant: Huawei Technologies Co., Ltd., Longgang District Shenzhen, Guangdong 518129 (CN)
(72) Inventor: WEI, Anni, Shenzhen Guangdong 518129 (CN); XIONG, Chunshan, Shenzhen Guangdong 518129 (CN)
(74) Representative: Pfenning, Meinig & Partner mbB
(86) International application number: PCT/CN2015/083772
(87) International publication number: WO 2017/008203

(57) **Abstract**

A protocol frame transmission method, apparatus, and system, and a node device are provided. The protocol frame transmission method includes: encapsulating one protocol frame into at least one TCP data packet, where the last TCP data packet in the at least one TCP data packet includes indication information, and the indication information is used to indicate that the last TCP data packet is the last TCP data packet corresponding to the protocol frame (S101); and sending the at least one TCP data packet to a node device (S102). According to the protocol frame transmission method, apparatus, and system, and the node device, it can be ensured that a data part of one TCP data packet includes data of only one protocol frame.

## Description

### TECHNICAL FIELD

The present invention relates to the field of computer application technologies, and in particular, to a protocol frame transmission method, apparatus, and system, and a node device.

### BACKGROUND

A request/response mode is used in HTTP (Hyper Text Transfer Protocol, Hypertext Transfer Protocol) to transfer WWW (World Wide Web, World Wide Web) data. A first node device initiates a request to establish a TCP (Transmission Control Protocol, Transmission Control Protocol) connection to a designated port of a second node device. The second node device listens, on the designated port, to the request sent by the first node device. When the second node device receives the request, the second node device sends a response message to the first node device. HTTP 2.0 is HTTP of a version 2.0. An HTTP 2.0 frame is a basic protocol unit of HTTP 2.0. The HTTP 2.0 frame is higher layer data sent by an application layer to a transport layer, and includes a frame header of 9 bytes and a payload (payload), and the frame header may include a length field. In HTTP 2.0, resource utilization is increased and a protocol frame transmission delay is reduced by means of header field compression and multiplexing. The multiplexing is implemented by dividing the TCP connection into multiple HTTP 2.0 streams and allocating multiple HTTP 2.0 frames to one HTTP 2.0 stream.

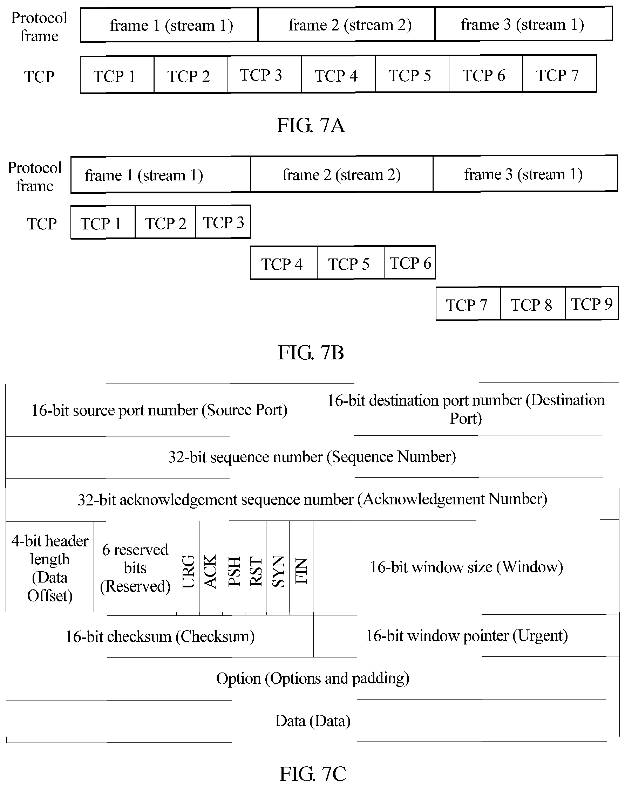

One HTTP 2.0 frame is encapsulated into at least one TCP data packet according to an MSS (Management Support System, maximum segment size). The MSS is a maximum length of data that each TCP data packet can carry in a process of negotiation communication between receiving and sending parties when the TCP connection is established. The application layer sends the HTTP 2.0 frame to the transport layer, and the transport layer encapsulates the HTTP 2.0 frame into the TCP data packet according to the MSS. A data part length of each TCP data packet is the MSS. FIG. 7A is used as an example. HTTP 2.0 frames may include a first frame, a second frame, and a third frame, both a data volume of the first frame and a data volume of the second frame are 3000 bytes, and an MSS is 1460 bytes. In this case, the transport layer may encapsulate the HTTP 2.0 frames into five TCP data packets according to the MSS. A data part of a first TCP data packet includes only data of the first frame, a data part of a second TCP data packet includes only data of the first frame, a data part of a third TCP data packet includes data of the first frame and data of the second frame, and a data part of a fourth TCP data packet includes only data of the second frame. The data part of the third TCP data packet includes data of the first frame and data of the second frame. In the foregoing encapsulation manner, different HTTP 2.0 frames are encapsulated into a same TCP data packet, and consequently data parsing cannot be implemented.

### SUMMARY

Embodiments of the present invention provide a protocol frame transmission method, apparatus, and system, and a node device, to ensure that a data part of one TCP data packet includes data of only one protocol frame.

A first aspect of the present invention provides a protocol frame transmission method, including:
encapsulating one protocol frame into at least one TCP data packet, where the last TCP data packet in the at least one TCP data packet includes indication information, and the indication information is used to indicate that the last TCP data packet is the last TCP data packet corresponding to the protocol frame; and
sending the at least one TCP data packet to a node device.

In a first possible implementation, a data part length of the last TCP data packet is 0, to indicate that the last TCP data packet is the last TCP data packet corresponding to the protocol frame.

With reference to the first possible implementation of the first aspect, in a second possible implementation, a header of the last TCP data packet includes a sending sequence number and an acknowledgement sequence number; and
the sending sequence number is the same as a sending sequence number of a start TCP data packet corresponding to a next protocol frame, and the acknowledgement sequence number is determined according to received data sent by the node device.

With reference to the first possible implementation of the first aspect, in a third possible implementation, a header of the last TCP data packet includes a sending sequence number and an acknowledgement sequence number; and
the sending sequence number is the same as a sending sequence number of a start TCP data packet corresponding to a next protocol frame, and the acknowledgement sequence number is the same as an acknowledgement sequence number of a previous data packet of the last TCP data packet.

With reference to the third possible implementation of the first aspect, in a fourth possible implementation, before the encapsulating one protocol frame into at least one TCP data packet, the method further includes:
obtaining the protocol frame sent by a management terminal, where the protocol frame includes terminal identification information, and the terminal identification information is used to instruct to send the at least one TCP data packet corresponding to the protocol frame to the node device corresponding to the terminal identification information.

With reference to any one of the first to the fourth possible implementations of the first aspect, in a fifth possible implementation, the encapsulating one protocol frame into at least one TCP data packet includes:
adding one TCP data packet after the last TCP data packet that is corresponding to the protocol frame and that includes data, where a data part length of the added TCP data packet is 0.

With reference to the possible implementation of the first aspect, in a sixth possible implementation, the encapsulating one protocol frame into at least one TCP data packet includes:
when a data volume of the last TCP data packet that is corresponding to the protocol frame and that includes data is less than a preset MSS, the last TCP data packet that includes data includes only data of the protocol frame, and the indication information is the data volume of the last TCP data packet that includes data.

With reference to the possible implementation of the first aspect, in a seventh possible implementation, the indication information is identification information included in a header of the last TCP data packet.

With reference to any one of the first aspect or the first to the seventh possible implementations of the first aspect, in an eighth possible implementation, a data part of the at least one TCP data packet includes only data of the protocol frame.

With reference to any one of the first aspect or the first to the eighth possible implementations of the first aspect, in a ninth possible implementation, before the sending the at least one TCP data packet to a node device, the method further includes:
receiving a TCP data packet sent by the node device, where
   the encapsulating one protocol frame into at least one TCP data packet includes:
   adding, to a to-be-sent TCP data packet in the at least one TCP data packet, an acknowledgement sequence number of the TCP data packet sent by the node device, where the acknowledgement sequence number is used to indicate that the TCP data packet sent by the node device is correctly received.

With reference to any one of the first aspect or the first to the ninth possible implementations of the first aspect, in a tenth possible implementation, before the encapsulating one protocol frame into at least one TCP data packet, the method further includes:
sending a notification message to the node device, where the notification message is used to indicate that the last TCP data packet in the at least one TCP data packet includes the indication information, and the indication information is used to indicate that the last TCP data packet is the last TCP data packet corresponding to the protocol frame.

With reference to the tenth possible implementation of the first aspect, in an eleventh possible implementation, the notification information is carried in an HTTP 2.0 setting frame or an HTTP 2.0 header field of the protocol frame.

With reference to any one of the first aspect or the first to the eleventh possible implementations of the first aspect, in a twelfth possible implementation, a header of the at least one TCP data packet includes data type information, and the data type information is used to indicate a data type of the data part of the TCP data packet.

With reference to any one of the first aspect or the first to the twelfth possible implementations of the first aspect, in a thirteenth possible implementation, the protocol frame is a TLS frame or an HTTP frame.

With reference to any one of the first aspect or the first to the thirteenth possible implementations of the first aspect, in a fourteenth possible implementation, before the encapsulating one protocol frame into at least one TCP data packet, the method further includes:
compressing the protocol frame into at least one compressed package, where the at least one compressed package includes only the protocol frame.

A second aspect of the present invention provides a protocol frame parsing method, including:
receiving at least one TCP data packet that is sent by a node device and that is obtained by encapsulating one protocol frame, where the last TCP data packet in the at least one TCP data packet includes indication information, and the indication information is used to indicate that the last TCP data packet is the last TCP data packet corresponding to the protocol frame;
determining, according to the indication information, a start TCP data packet corresponding to a next protocol frame; and
performing data parsing on the next protocol frame from the start TCP data packet.

In a first possible implementation, the determining, according to the indication information, a start TCP data packet corresponding to a next protocol frame includes:
when a data part length of the last TCP data packet is 0, determining that a next TCP data packet is the start TCP data packet corresponding to the next protocol frame.

With reference to the possible implementation of the second aspect, in a second possible implementation, the determining, according to the indication information, a start TCP data packet corresponding to a next protocol frame includes:
when a data volume of the last TCP data packet is less than a preset MSS, determining that a next TCP data packet is the start TCP data packet corresponding to the next protocol frame.

With reference to the possible implementation of the second aspect, in a third possible implementation, the determining, according to the indication information, a start TCP data packet corresponding to a next protocol frame includes:
when a header of the last TCP data packet includes identification information, determining that a next TCP data packet is the start TCP data packet corresponding to the next protocol frame.

With reference to any one of the second aspect or the first to the third possible implementations of the second aspect, in a fourth possible implementation, before the receiving at least one TCP data packet that is sent by a node device and that is obtained by encapsulating one protocol frame, the method further includes:
sending a TCP data packet to the node device; and
after the receiving at least one TCP data packet that is sent by a node device and that is obtained by encapsulating one protocol frame, the method further includes:
   when the received TCP data packet carries an acknowledgement sequence number of the TCP data packet sent to the node device, determining, according to the acknowledgement sequence number, that the node device correctly receives the TCP data packet sent to the node device.

With reference to any one of the second aspect or the first to the fourth possible implementations of the second aspect, in a fifth possible implementation, before the determining, according to the indication information, a start TCP data packet corresponding to a next protocol frame, the method further includes:
receiving a notification message sent by the node device; and
obtaining, according to the notification message, the indication information in the last TCP data packet corresponding to the protocol frame.

With reference to any one of the second aspect or the first to the fifth possible implementations of the second aspect, in a sixth possible implementation, a header of the at least one TCP data packet includes data type information; and
the performing data parsing on the next protocol frame from the start TCP data packet includes:
obtaining a data type of a data part of the TCP data packet according to the data type information.

With reference to any one of the second aspect or the first to the sixth possible implementations of the second aspect, in a seventh possible implementation, before the performing data parsing on the next protocol frame from the start TCP data packet, the method further includes:
determining that a header field of the next protocol frame is compressed by using a static table.

With reference to any one of the second aspect or the first to the seventh possible implementations of the second aspect, in an eighth possible implementation, all TCP data packets corresponding to the next protocol frame belong to a same HTPP 2.0 stream; and
after the performing data parsing on the next protocol frame from the start TCP data packet, the method further includes:
when data parsing performed on the next protocol frame fails, suspending data parsing performed on a protocol frame included in the HTTP 2.0 stream.

A third aspect of the present invention provides a protocol frame transmission apparatus, including:
an encapsulation unit, configured to encapsulate one protocol frame into at least one TCP data packet, where the last TCP data packet in the at least one TCP data packet includes indication information, and the indication information is used to indicate that the last TCP data packet is the last TCP data packet corresponding to the protocol frame; and
a sending unit, configured to send the at least one TCP data packet to a node device.

In a first possible implementation, a data part length of the last TCP data packet is 0, to indicate that the last TCP data packet is the last TCP data packet corresponding to the protocol frame.

With reference to the first possible implementation of the third aspect, in a second possible implementation, a header of the last TCP data packet includes a sending sequence number and an acknowledgement sequence number; and
the sending sequence number is the same as a sending sequence number of a start TCP data packet corresponding to a next protocol frame, and the acknowledgement sequence number is determined according to received data sent by the node device.

With reference to the first possible implementation of the third aspect, in a third possible implementation, a header of the last TCP data packet includes a sending sequence number and an acknowledgement sequence number; and
the sending sequence number is the same as a sending sequence number of a start TCP data packet corresponding to a next protocol frame, and the acknowledgement sequence number is the same as an acknowledgement sequence number of a previous data packet of the last TCP data packet.

With reference to the third possible implementation of the third aspect, in a fourth possible implementation, an obtaining unit is configured to: before the encapsulation unit encapsulates the protocol frame into the at least one TCP data packet, obtain the protocol frame sent by a management terminal, where the protocol frame includes terminal identification information, and the terminal identification information is used to instruct to send the at least one TCP data packet corresponding to the protocol frame to the node device corresponding to the terminal identification information.

With reference to any one of the first to the fourth possible implementations of the third aspect, in a fifth possible implementation, the encapsulation unit is configured to add one TCP data packet after the last TCP data packet that is corresponding to the protocol frame and that includes data, where a data part length of the added TCP data packet is 0.

With reference to the possible implementation of the third aspect, in a sixth possible implementation, when a data volume of the last TCP data packet that is corresponding to the protocol frame and that includes data is less than a preset MSS, the last TCP data packet that includes data includes only data of the protocol frame, and the indication information is the data volume of the last TCP data packet that includes data.

With reference to the possible implementation of the third aspect, in a seventh possible implementation, the indication information is identification information included in a header of the last TCP data packet.

With reference to any one of the third aspect or the first to the seventh possible implementations of the third aspect, in an eighth possible implementation, a data part of the at least one TCP data packet includes only data of the protocol frame.

With reference to any one of the third aspect or the first to the eighth possible implementations of the third aspect, in a ninth possible implementation, the apparatus further includes:
a receiving unit, configured to receive a TCP data packet sent by the node device, where
the encapsulation unit is configured to add, to a to-be-sent TCP data packet in the at least one TCP data packet, an acknowledgement sequence number of the TCP data packet sent by the node device, where the acknowledgement sequence number is used to indicate that the TCP data packet sent by the node device is correctly received.

With reference to any one of the third aspect or the first to the ninth possible implementations of the third aspect, in a tenth possible implementation, the sending unit is further configured to send a notification message to the node device before the encapsulation unit encapsulates the protocol frame into the at least one TCP data packet, where the notification message is used to indicate that the last TCP data packet in the at least one TCP data packet includes the indication information, and the indication information is used to indicate that the last TCP data packet is the last TCP data packet corresponding to the protocol frame.

With reference to the tenth possible implementation of the third aspect, in an eleventh possible implementation, the notification information is carried in an HTTP 2.0 setting frame or an HTTP 2.0 header field of the protocol frame.

With reference to any one of the third aspect or the first to the eleventh possible implementations of the third aspect, in a twelfth possible implementation, a header of the at least one TCP data packet includes data type information, and the data type information is used to indicate a data type of the data part of the TCP data packet.

With reference to any one of the third aspect or the first to the twelfth possible implementations of the third aspect, in a thirteenth possible implementation, the protocol frame is a TLS frame or an HTTP frame.

With reference to any one of the third aspect or the first to the thirteenth possible implementations of the third aspect, in a fourteenth possible implementation, the apparatus further includes:
a compression unit, configured to compress the protocol frame into at least one compressed package before the encapsulation unit encapsulates the protocol frame into the at least one TCP data packet, where the at least one compressed package includes only the protocol frame.

A fourth aspect of the present invention provides a node device, including a processor, a memory, and a network interface, where the memory stores a set of program code, and the processor is configured to invoke the program code stored in the memory, to perform the following operations:
encapsulating one protocol frame into at least one TCP data packet, where the last TCP data packet in the at least one TCP data packet includes indication information, and the indication information is used to indicate that the last TCP data packet is the last TCP data packet corresponding to the protocol frame; and
sending the at least one TCP data packet to a node device.

A fifth aspect of the present invention provides a protocol frame parsing apparatus, including:
a receiving unit, configured to receive at least one TCP data packet that is sent by a node device and that is obtained by encapsulating one protocol frame, where the last TCP data packet in the at least one TCP data packet includes indication information, and the indication information is used to indicate that the last TCP data packet is the last TCP data packet corresponding to the protocol frame;
a determining unit, configured to determine, according to the indication information, a start TCP data packet corresponding to a next protocol frame; and
a parsing unit, configured to perform data parsing on the next protocol frame from the start TCP data packet.

In a first possible implementation, the determining unit is configured to: when a data part length of the last TCP data packet is 0, determine that a next TCP data packet is the start TCP data packet corresponding to the next protocol frame.

With reference to the possible implementation of the fifth aspect, in a second possible implementation, the determining unit is configured to: when a data volume of the last TCP data packet is less than a preset MSS, determine that a next TCP data packet is the start TCP data packet corresponding to the next protocol frame.

With reference to the possible implementation of the fifth aspect, in a third possible implementation, the determining unit is configured to: when a header of the last TCP data packet includes identification information, determine that a next TCP data packet is the start TCP data packet corresponding to the next protocol frame.

With reference to any one of the fifth aspect or the first to the third possible implementations of the fifth aspect, in a fourth possible implementation, the apparatus further includes:
a sending unit, configured to send a TCP data packet to the node device before the receiving unit receives the at least one TCP data packet that is sent by the node device and that is corresponding to the protocol frame, where
the determining unit is further configured to: when the received TCP data packet carries an acknowledgement sequence number of the TCP data packet sent to the node device, determine, according to the acknowledgement sequence number, that the node device correctly receives the TCP data packet sent to the node device.

With reference to any one of the fifth aspect or the first to the fourth possible implementations of the fifth aspect, in a fifth possible implementation, the receiving unit is further configured to: before the determining unit determines, according to the indication information, the start TCP data packet corresponding to the next protocol frame, receive a notification message sent by the node device; and
the apparatus further includes:
an obtaining unit, configured to obtain, according to the notification information, the indication information in the last TCP data packet corresponding to the protocol frame.

With reference to any one of the fifth aspect or the first to the fifth possible implementations of the fifth aspect, in a sixth possible implementation, a header of the at least one TCP data packet includes data type information; and
the parsing unit is configured to obtain a data type of a data part of the TCP data packet according to the data type information.

With reference to any one of the fifth aspect or the first to the sixth possible implementations of the fifth aspect, in a seventh possible implementation, the determining unit is further configured to: before the parsing unit performs data parsing on the next protocol frame from the start TCP data packet, determine that a header field of the next protocol frame is compressed by using a static table.

With reference to any one of the fifth aspect or the first to the seventh possible implementations of the fifth aspect, in an eighth possible implementation, all TCP data packets corresponding to the next protocol frame belong to a same HTTP 2.0 stream; and
the protocol frame transmission apparatus further includes:
a control unit, configured to: after the parsing unit performs data parsing on the next protocol frame from the start TCP data packet, when data parsing performed on the next protocol frame fails, suspend data parsing performed on a protocol frame included in the HTTP 2.0 stream.

A sixth aspect of the present invention provides a node device, including a processor, a memory, and a network interface, where the memory stores a set of program code, and the processor is configured to invoke the program code stored in the memory, to perform the following operations:
receiving at least one TCP data packet that is sent by a node device and that is obtained by encapsulating one protocol frame, where the last TCP data packet in the at least one TCP data packet includes indication information, and the indication information is used to indicate that the last TCP data packet is the last TCP data packet corresponding to the protocol frame;
determining, according to the indication information, a start TCP data packet corresponding to a next protocol frame; and
performing data parsing on the next protocol frame from the start TCP data packet.

A seventh aspect of the present invention provides a protocol frame transmission system, including the protocol frame encapsulation apparatus according to the third aspect and the protocol frame parsing apparatus according to the fifth aspect.

In the embodiments of the present invention, the protocol frame is encapsulated into the at least one TCP data packet, where the last TCP data packet in the at least one TCP data packet includes the indication information, and the indication information is used to indicate that the last TCP data packet is the last TCP data packet corresponding to the protocol frame; and the at least one TCP data packet is sent to the node device. In this way, it can be ensured that a data part of one TCP data packet includes data of only one protocol frame.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a protocol frame transmission method according to a first embodiment of the present invention;
FIG. 2 is a schematic flowchart of a protocol frame parsing method according to an embodiment of the present invention;
FIG. 3 is a schematic flowchart of a protocol frame transmission method according to a second embodiment of the present invention;
FIG. 4 is a schematic flowchart of a protocol frame transmission method according to a third embodiment of the present invention;
FIG. 5 is a schematic flowchart of a protocol frame transmission method according to a fourth embodiment of the present invention;
FIG. 6 is a schematic flowchart of a protocol frame transmission method according to a fifth embodiment of the present invention;
FIG. 7A is a schematic interface diagram in which a protocol frame is encapsulated into a TCP data packet according to the prior art;
FIG. 7B is a schematic interface diagram in which a protocol frame is encapsulated into a TCP data packet according to an embodiment of the present invention;
FIG. 7C is a schematic structural diagram of a TCP data packet according to an embodiment of the present invention;
FIG. 7D is a schematic interface diagram of a setting frame according to an embodiment of the present invention;
FIG. 7E is a schematic structural diagram of an HTTP frame according to an embodiment of the present invention;
FIG. 7F is a schematic structural diagram of a TLS frame according to an embodiment of the present invention;
FIG. 8 is a schematic structural diagram of a protocol frame transmission apparatus according to an embodiment of the present invention;
FIG. 9 is a schematic structural diagram of a node device according to a first embodiment of the present invention;
FIG. 10 is a schematic structural diagram of a protocol frame parsing apparatus according to an embodiment of the present invention;
FIG. 11 is a schematic structural diagram of a node device according to a second embodiment of the present invention; and
FIG. 12 is a schematic structural diagram of a protocol frame transmission system according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In an existing protocol frame transmission method, protocol frames are encapsulated into at least one TCP data packet according to an MSS, and a data part of one TCP data packet includes data of different protocol frames. Further, after the at least one TCP data packet is sent to a node device, the node device cannot recognize boundaries of the protocol frames, and therefore cannot perform data parsing on the protocol frames.

Embodiments of the present invention provide a protocol frame transmission method. One protocol frame is encapsulated into at least one TCP data packet, where the last TCP data packet in the at least one TCP data packet includes indication information, and the indication information is used to indicate that the last TCP data packet is the last TCP data packet corresponding to the protocol frame; and the at least one TCP data packet is sent to a node device. In this way, it is ensured that a data part of one TCP data packet includes data of only one protocol frame.

The protocol frame mentioned in the embodiments of the present invention may include an HTTP frame or a TLS (Transport Layer Security, Transport Layer Security) frame. For example, the HTTP frame may be an HTTP 2.0 frame, HTTP 2.0 is at an application layer, and the HTTP 2.0 frame is data at the application layer. One HTTP frame may be encapsulated into at least one TCP data packet, the last TCP data packet in the at least one TCP data packet includes indication information, and the indication information is used to indicate that the last TCP data packet is the last TCP data packet corresponding to the HTTP frame. For another example, TLS is located between the application layer and a transport layer, and is a security protocol that provides encryption, identity authentication, and data integrity assurance for network communication. One HTTP frame may be encapsulated into at least one TLS frame, the last TLS frame in the at least one TLS frame includes indication information, and the indication information is used to indicate that the last TLS frame is the last TLS frame corresponding to the HTTP frame. Further, one TLS frame may be encapsulated into at least one TCP data packet, the last TCP data packet in the at least one TCP data packet includes indication information, and the indication information is used to indicate that the last TCP data packet is the last TCP data packet corresponding to the protocol frame.

In the embodiments of the present invention, the protocol frame may be compressed into at least one compressed package before the protocol frame is encapsulated into the at least one TCP data packet, and the at least one compressed package includes only the protocol frame.

The node device mentioned in the embodiments of the present invention may include a client, a server, or the like, for example, a web browser, an e-mail client, or an e-mail server.

The protocol frame transmission method mentioned in the embodiments of the present invention may run on a terminal such as a server, a client, an agent client, or an agent server. This is not specifically limited in the embodiments of the present invention.

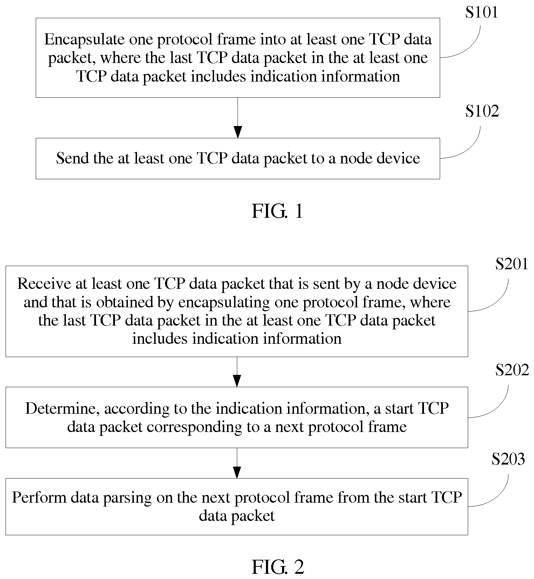

Referring to FIG. 1, FIG. 1 is a schematic flowchart of a protocol frame transmission method according to a first embodiment of the present invention. As shown in the figure, the protocol frame encapsulation method in this embodiment of the present invention may include the following steps.

S101. Encapsulate one protocol frame into at least one TCP data packet, where the last TCP data packet in the at least one TCP data packet includes indication information.

A terminal may encapsulate the protocol frame into the at least one TCP data packet, the last TCP data packet in the at least one TCP data packet includes the indication information, and the indication information is used to indicate that the last TCP data packet is the last TCP data packet corresponding to the protocol frame. A schematic interface diagram that is shown in FIG. 7B and in which a protocol frame is encapsulated into a TCP data packet is used as an example. The terminal may encapsulate a first frame (frame 1) into three TCP data packets, and encapsulate a second frame (frame 2) into three TCP data packets. A start point of the first frame is a start point of a TCP1 data packet, a start point of the second frame is a start point of a TCP4 data packet, data parts of the TCP1 data packet, a TCP2 data packet, and a TCP3 data packet include only data of the first frame, and data parts of the TCP4 data packet, a TCP5 data packet, and a TCP6 data packet include only data of the second frame.

For example, if both a data volume of a first protocol frame and a data volume of a second protocol frame are 3000 bytes, and a preset MSS agreed on by the terminal and a node device is 1460 bytes, the terminal may encapsulate the first protocol frame into three TCP data packets. A data part length of a first TCP data packet is 1460 bytes, a data part length of a second TCP data packet is 1460 bytes, a data part length of a third TCP data packet is 80 bytes, the second TCP data packet includes indication information, and the indication information is used to indicate that the second TCP data packet is the last TCP data packet corresponding to the first protocol frame. Likewise, the terminal may encapsulate the second protocol frame into three TCP data packets. A data part length of a fourth TCP data packet is 1460 bytes, a data part length of a fifth TCP data packet is 1460 bytes, a data part length of a sixth TCP data packet is 80 bytes, the sixth TCP data packet includes indication information, and the indication information is used to indicate that the fourth TCP data packet is the last TCP data packet corresponding to the second protocol frame.

In an optional embodiment, the protocol frame may be a TLS frame or an HTTP frame. The TLS frame is a basic protocol unit of TLS, and TLS runs between an application layer and a transport layer. The HTTP frame is a basic protocol unit of HTTP, and HTTP runs at the application layer. For example, the HTTP frame may be an HTTP 2.0 frame.

In an optional embodiment, a data part of the at least one TCP data packet includes only data of the protocol frame. For example, the terminal encapsulates a first protocol frame into a first TCP data packet and a second TCP data packet, a data part of the first TCP data packet includes only data of the first protocol frame, and a data part of the second TCP data packet includes only data of the first protocol frame. Likewise, the terminal encapsulates a second protocol frame into a third TCP data packet and a fourth TCP data packet, a data part of the third TCP data packet includes only data of the second protocol frame, and a data part of the fourth TCP data packet includes only data of the second protocol frame.

In an optional embodiment, a data part length of the last TCP data packet may be 0, to indicate that the last TCP data packet is the last TCP data packet corresponding to the protocol frame. For example, if a data volume of a first protocol frame is 2000 bytes, and a preset MSS agreed on by the terminal and the node device is 1460 bytes, the terminal may encapsulate the first protocol frame into a first TCP data packet, a second TCP data packet, and a third TCP data packet. A data part length of the first TCP data packet is 1460 bytes, a data part length of the second TCP data packet is 540 bytes, and a data part length of the third TCP data packet is 0, to indicate that the third TCP data packet is the last TCP data packet corresponding to the first protocol frame.

Further optionally, a header of the last TCP data packet may include a sending sequence number and an acknowledgement sequence number. The sending sequence number is the same as a sending sequence number of a start TCP data packet corresponding to a next protocol frame, and the acknowledgement sequence number is determined according to received data sent by the node device.

Further optionally, a header of the last TCP data packet may include a sending sequence number and an acknowledgement sequence number. The sending sequence number is the same as a sending sequence number of a start TCP data packet corresponding to a next protocol frame, and the acknowledgement sequence number is the same as an acknowledgement sequence number of a previous data packet of the last TCP data packet.

Further optionally, before encapsulating the protocol frame into the at least one TCP data packet, the terminal may obtain the protocol frame sent by a management terminal. The protocol frame may include terminal identification information, and the terminal identification information is used to instruct to send the at least one TCP data packet corresponding to the protocol frame to the node device corresponding to the terminal identification information.

Further optionally, the terminal may add one TCP data packet after the last TCP data packet that includes data, and a data part length of the added TCP data packet is 0. For example, when a data volume of the last TCP data packet that is corresponding to the protocol frame and that includes data is equal to a preset MSS, the terminal may add one TCP data packet after the last TCP data packet that includes data. A data part length of the added TCP data packet is 0. For another example, when a data volume of the last TCP data packet that is corresponding to the protocol frame and that includes data is less than a preset MSS, the terminal may add one TCP data packet after the last TCP data packet that includes data. A data part length of the added TCP data packet is 0.

In an optional embodiment, when a data volume of the last TCP data packet that is corresponding to the protocol frame and that includes data is less than a preset MSS, the last TCP data packet that includes data includes only data of the protocol frame, and the indication information is the data volume of the last TCP data packet that includes data. For example, if a data volume of a first protocol frame is 2000 bytes, and a preset MSS agreed on by the terminal and the node device is 1460 bytes, the terminal may encapsulate the first protocol frame into a first TCP data packet and a second TCP data packet. A data part length of the first TCP data packet is 1460 bytes, a data part length of the second TCP data packet is 540 bytes, the second TCP data packet includes only data of the first protocol frame, indication information is a data volume of the second TCP data packet, and the terminal may determine, according to the indication information, that the data volume of the second TCP data packet is less than the preset MSS, and therefore, the second TCP data packet is the last TCP data packet of the first protocol frame.

In an optional embodiment, the indication information may be identification information included in a header of the last TCP data packet. During specific implementation, when a data volume of the last TCP data packet that is corresponding to the protocol frame and that includes data is equal to a preset MSS, the terminal may add the identification information to a header of the last TCP data packet that includes data. For another example, when a data volume of the last TCP data packet that is corresponding to the protocol frame and that includes data is less than a preset MSS, the terminal may add the identification information to a header of the last TCP data packet that includes data. For example, if a data volume of a first protocol frame is 2000 bytes, and a preset MSS agreed on by the terminal and the node device is 1460 bytes, the terminal may encapsulate the first protocol frame into a first TCP data packet and a second TCP data packet. A data part length of the first TCP data packet is 1460 bytes, a data part length of the second TCP data packet is 540 bytes, a header of the second TCP data packet includes identification information, and the terminal may determine, according to the identification information, that the second TCP data packet is the last TCP data packet of the first protocol frame.

In an optional embodiment, before encapsulating the protocol frame into the at least one TCP data packet, the terminal may further send a notification message to the node device. The notification message may be used to indicate that the last TCP data packet in the at least one TCP data packet includes the indication information, and the indication information is used to indicate that the last TCP data packet is the last TCP data packet corresponding to the protocol frame.

Further optionally, the notification message may be carried in an HTTP 2.0 setting frame or an HTTP 2.0 header field of the protocol frame.

In an optional embodiment, a header of the at least one TCP data packet may include data type information, and the data type information is used to indicate a data type of the data part of the TCP data packet. In an existing protocol frame parsing method, blind parsing is performed on a protocol frame by using a frame header of the protocol frame, and a data type of the protocol frame cannot be accurately obtained. However, in this embodiment of the present invention, the header of the at least one TCP data packet includes the data type information, and the node device may obtain the data type of the data part of the TCP data packet according to the data type information, to obtain a data type of the protocol frame. Therefore, data parsing precision is improved.

In an optional embodiment, the terminal may compress the protocol frame into at least one compressed package before encapsulating the protocol frame into the at least one TCP data packet, and the at least one compressed package includes only the protocol frame. During specific implementation, the terminal usually compresses the protocol frame by using a preset compression algorithm, and then transmits the compressed protocol frame to the node device, to increase a transmission rate. To avoid a case in which different protocol frames are compressed into a same compressed package, and consequently the protocol frames cannot be recognized, and the protocol frames cannot be encapsulated into at least one TCP data packet, in this embodiment of the present invention, one protocol frame is compressed into at least one compressed package, and data in the compressed package is encapsulated into at least one TCP data packet, so that each protocol frame is encapsulated into at least one TCP data packet.

S102. Send the at least one TCP data packet to a node device.

The terminal may send the at least one TCP data packet to the node device after encapsulating the protocol frame into the at least one TCP data packet.

In an optional embodiment, before sending the at least one TCP data packet to the node device, the terminal may receive a TCP data packet sent by the node device, and add, to a to-be-sent TCP data packet in the at least one TCP data packet, an acknowledgement sequence number of the TCP data packet sent by the node device. The acknowledgement sequence number is used to indicate that the TCP data packet sent by the node device is correctly received. In an existing protocol frame transmission method, a terminal may send an ACK data packet to a node device after receiving a TCP data packet sent by the node device. A data part length of the ACK data packet is 0, to indicate that the terminal correctly receives the TCP data packet sent by the node device. Therefore, resource utilization is relatively low. In this embodiment of the present invention, after the TCP data packet sent by the node device is received, the acknowledgement sequence number of the TCP data packet sent by the node device may be added to the to-be-sent TCP data packet in the at least one TCP data packet. The acknowledgement sequence number is used to indicate that the TCP data packet sent by the node device is correctly received. In this embodiment of the present invention, while no ACK data packet is separately sent, it is indicated that the TCP data packet sent by the node device is correctly received, so that resource utilization can be improved.

In the protocol frame encapsulation method shown in FIG. 1, the protocol frame is encapsulated into the at least one TCP data packet, where the last TCP data packet in the at least one TCP data packet includes the indication information, and the indication information is used to indicate that the last TCP data packet is the last TCP data packet corresponding to the protocol frame; and the at least one TCP data packet is sent to the node device. In this way, it is ensured that a data part of one TCP data packet includes data of only one protocol frame.

Referring to FIG. 2, FIG. 2 is a schematic flowchart of a protocol frame parsing method according to an embodiment of the present invention. As shown in the figure, the protocol frame parsing method in this embodiment of the present invention may include the following steps.

S201. Receive at least one TCP data packet that is sent by a node device and that is obtained by encapsulating one protocol frame, where the last TCP data packet in the at least one TCP data packet includes indication information.

A terminal may receive the at least one TCP data packet that is sent by the node device and that is obtained by encapsulating the protocol frame, the last TCP data packet in the at least one TCP data packet includes the indication information, and the indication information is used to indicate that the last TCP data packet is the last TCP data packet corresponding to the protocol frame. For example, the node device may encapsulate the protocol frame into the at least one TCP data packet, the last TCP data packet in the at least one TCP data packet includes the indication information, and the node device sends the at least one TCP data packet to the terminal, so that the terminal receives the at least one TCP data packet.

In an optional embodiment, the terminal may send a TCP data packet to the node device before receiving the at least one TCP data packet that is sent by the node device and that is obtained by encapsulating the protocol frame. Further, after the terminal receives the at least one TCP data packet that is sent by the node device and that is obtained by encapsulating the protocol frame, when the received TCP data packet carries an acknowledgement sequence number of the TCP data packet sent to the node device, the terminal may determine, according to the acknowledgement sequence number, that the node device correctly receives the TCP data packet sent to the node device.

For example, the terminal may send the TCP data packet to the node device before receiving the at least one TCP data packet sent by the node device, and the node device receives the TCP data packet sent by the terminal, and adds, to a to-be-sent TCP data packet in the at least one TCP data packet, the acknowledgement sequence number of the TCP data packet sent by the terminal. In this case, after receiving the at least one TCP data packet sent by the node device, the terminal may determine, according to the acknowledgement sequence number, that the node device correctly receives the TCP data packet sent by the terminal.

S202. Determine, according to the indication information, a start TCP data packet corresponding to a next protocol frame.

The terminal may determine, according to the indication information, the start TCP data packet corresponding to the next protocol frame. The start TCP data packet corresponding to the next protocol frame is a next TCP data packet of the last TCP data packet corresponding to the protocol frame.

In an optional embodiment, when a data part length of the last TCP data packet is 0, the terminal may determine that a next TCP data packet is the start TCP data packet corresponding to the next protocol frame. For example, if the node device adds one TCP data packet after the last TCP data packet that is corresponding to the protocol frame and that includes data, and a data part length of the added TCP data packet is 0, the terminal may determine that a next TCP data packet of the added TCP data packet is the start TCP data packet corresponding to the next protocol frame.

In an optional embodiment, when a data volume of the last TCP data packet is less than a preset MSS, the terminal may determine that a next TCP data packet is the start TCP data packet corresponding to the next protocol frame. For example, the terminal may determine whether a data volume of each TCP data packet is less than the preset MSS, and when a data volume of a TCP data packet is less than the preset MSS, the terminal may determine that a next TCP data packet of the TCP data packet is the start TCP data packet corresponding to the next protocol frame. Further optionally, when a data volume of a TCP data packet is equal to the preset MSS, the terminal may determine whether a data part length of a next TCP data packet is 0, and when the data part length of the next TCP data packet is 0, the terminal may determine that a next TCP data packet of the TCP data packet whose data part length is 0 is the start TCP data packet corresponding to the next protocol frame. Further optionally, when a data volume of a TCP data packet is equal to the preset MSS, the terminal may determine whether a header of each TCP data packet includes identification information, and when a header of a TCP data packet includes the identification information, the terminal may determine that a next TCP data packet of the TCP data packet is the start TCP data packet corresponding to the next protocol frame.

In an optional embodiment, when a header of the last TCP data packet includes identification information, the terminal may determine that a next TCP data packet is the start TCP data packet corresponding to the next protocol frame. For example, the terminal may determine whether a header of each TCP data packet includes identification information, and when a header of a TCP data packet includes the identification information, the terminal may determine that a next TCP data packet of the TCP data packet is the start TCP data packet corresponding to the next protocol frame.

In an optional embodiment, before determining, according to the indication information, the start TCP data packet corresponding to the next protocol frame, the terminal may receive a notification message sent by the node device, and obtain, according to the notification message, the indication information in the last TCP data packet corresponding to the protocol frame. For example, the terminal receives the notification message sent by the node device, and the notification message is used to instruct the terminal to recognize a boundary of the next protocol frame, so that data parsing can be performed on the next protocol frame. In this case, the terminal may obtain, according to the notification message, the indication information in the last TCP data packet corresponding to the protocol frame, determine, according to the indication information, the start TCP data packet corresponding to the next protocol frame, and perform data parsing on the next protocol frame from the start TCP data packet.

S203. Perform data parsing on the next protocol frame from the start TCP data packet.

After determining the start TCP data packet corresponding to the next protocol frame, the terminal may perform data parsing on the next protocol frame from the start TCP data packet. For example, if the terminal determines that the start TCP data packet corresponding to the next protocol frame is a third TCP data packet, the terminal may parse a frame header and a payload of the next protocol frame from the third TCP data packet, and recognize a data type of the next protocol frame according to data in the payload. The data type of the protocol frame may include a text, an image, a video, audio, or the like.

In an optional embodiment, a header of the at least one TCP data packet may include data type information, and the terminal may obtain a data type of a data part of the TCP data packet according to the data type information, to obtain a data type of the protocol frame. In the prior art, a terminal performs blind parsing on a protocol frame by using a frame header of the protocol frame, and cannot accurately obtain a data type of the protocol frame. By contrast, in this embodiment of the present invention, the data type of the data part of the TCP data packet is obtained according to the data type information, so that the data type of the protocol frame is obtained. Therefore, data parsing precision can be improved.

In an optional embodiment, before performing data parsing on the next protocol frame from the start TCP data packet, the terminal may determine that a header field of the next protocol frame is compressed by using a static table. During specific implementation, the header field of the protocol frame may be compressed by using the static table or a dynamic table. The static table is specified by a protocol for a commonly used high frequency header field, and keeps unchanged in a protocol frame transmission process while the dynamic table changes dynamically in the transmission process. If the header field of the protocol frame is compressed by using the dynamic table, and the terminal is a source eNB (evolved NodeB), the source eNB maintains the dynamic table, and when the terminal is handed over from the source eNB to a target eNB, the target eNB cannot obtain the dynamic table, and therefore, cannot perform data parsing on the protocol frame. In this embodiment of the present invention, data parsing is performed on the next protocol frame from the start TCP data packet after it is determined that the header field of the next protocol frame is compressed by using the static table, so that data parsing efficiency can be improved.

In an optional embodiment, all TCP data packets corresponding to the next protocol frame belong to a same HTPP 2.0 stream. After the terminal performs data parsing on the next protocol frame from the start TCP data packet, when data parsing performed on the next protocol frame fails, the terminal suspends data parsing performed on a protocol frame included in the HTTP 2.0 stream. For example, the node device divides an image into multiple protocol frames, the multiple protocol frames belong to a same HTPP 2.0 stream, and a data type of each protocol frame is an image. The node device encapsulates each protocol frame into at least one TCP data packet, and after the node device sends the at least one TCP data packet to the terminal, when the terminal learns, by means of parsing, that a data type of one of the protocol frames is a video, the terminal also learns, by means of parsing, that a data type of another protocol frame in the HTPP 2.0 stream is a video. In this embodiment of the present invention, when data parsing performed on the protocol frame fails, data parsing performed on another protocol frame included in the HTTP 2.0 stream is suspended, so that data parsing efficiency can be improved.

In the protocol frame parsing method shown in FIG. 2, the at least one TCP data packet that is sent by the node device and that is obtained by encapsulating the protocol frame is received, where the last TCP data packet in the at least one TCP data packet includes the indication information; the start TCP data packet corresponding to the next protocol frame is determined according to the indication information; and data parsing is performed on the next protocol frame from the start TCP data packet. In this way, the boundary of the next protocol frame can be effectively recognized, so that data parsing can be performed on the next protocol frame.

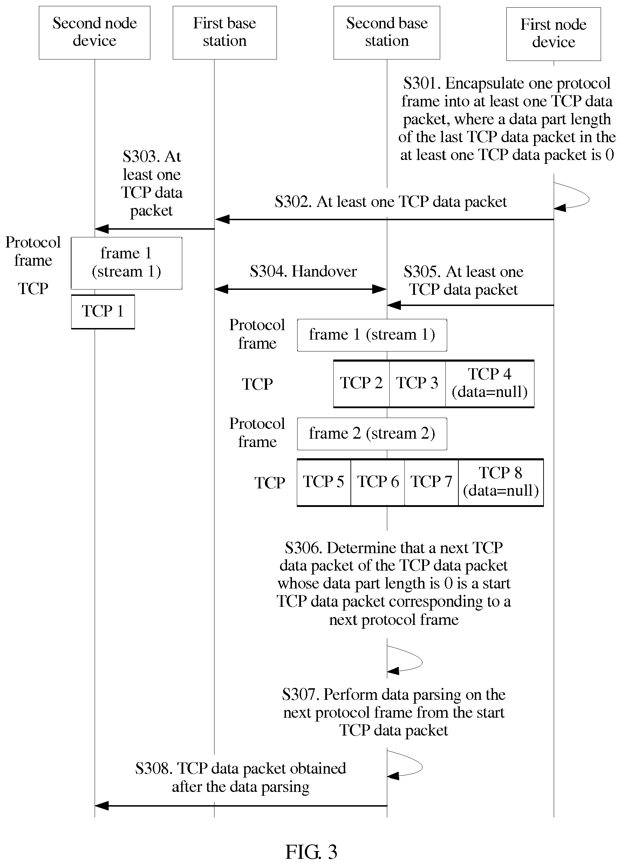

Referring to FIG. 3, FIG. 3 is a schematic flowchart of a protocol frame transmission method according to a second embodiment of the present invention. In this embodiment of the present invention, when sending a TCP data packet corresponding to a protocol frame to a second node device by using a base station, a first node device is handed over to another base station, that is, when sending the TCP data packet to the second node device by using a first base station, the first node device is handed over to a second base station to send the TCP data packet to the second node device. When the first node device is a server, the second node device may be a client. When the first node device is a client, the second node device may be a server. This is not specifically limited in this embodiment of the present invention. As shown in the figure, the protocol frame transmission method in this embodiment of the present invention may include the following steps.

S301. The first node device encapsulates one protocol frame into at least one TCP data packet, where a data part length of the last TCP data packet in the at least one TCP data packet is 0.

The first node device may encapsulate the protocol frame into the at least one TCP data packet, and the data part length of the last TCP data packet in the at least one TCP data packet is 0, to indicate that the last TCP data packet is the last TCP data packet corresponding to the protocol frame. The protocol frame may be an HTTP frame or a TLS frame, and a data part of the at least one TCP data packet includes only data of the protocol frame. For example, if a data volume of a protocol frame is 4000 bytes, and a preset MSS agreed on by the first node device and a third node device is 1460 bytes, the first node device may encapsulate the protocol frame into three TCP data packets. A data part length of a TCP1 data packet is 1460 bytes, a data part length of a TCP2 data packet is 1460 bytes, a data part length of a TCP3 data packet is 1080 bytes, and a data part length of a TCP4 data packet is 0.

In an optional embodiment, the first node device may add one TCP data packet after the last TCP data packet that is corresponding to the protocol frame and that includes data, and a data part length of the added TCP data packet is 0.

In an optional embodiment, the first node device may receive a TCP data packet sent by the first base station, and then add, to a to-be-sent TCP data packet in the at least one TCP data packet, an acknowledgement sequence number of the TCP data packet sent by the first base station. The acknowledgement sequence number is used to indicate that the TCP data packet sent by the first base station is correctly received.

In the prior art, after receiving a TCP data packet sent by a first base station, a first node device needs to send an ACK data packet to the first base station. The ACK data packet is used to indicate that the first node device correctly receives TCP data sent by the first base station, and a data part length of the ACK data packet is 0. After receiving the ACK data packet, the first base station incorrectly considers that the ACK data packet is the last TCP data packet corresponding to a protocol frame. For the technical problem, in this embodiment of the present invention, the acknowledgement sequence number of the TCP data packet sent by the first base station may be added to the to-be-sent TCP data packet in the at least one TCP data packet, and the acknowledgement sequence number is used to indicate that the TCP data packet sent by the first base station is correctly received.

For example, in FIG. 7C, when a to-be-sent TCP data packet is a TCP1 data packet, the first node device may add an acknowledgement sequence number of a TCP data packet sent by the first base station to a location of a 32-bit acknowledgement sequence number of the TCP1 data packet. After receiving the TCP1 data packet, the first base station may determine, according to the added acknowledgement sequence number, that the first node device correctly receives the TCP data packet sent by the first base station.

In an optional embodiment, before encapsulating the protocol frame into the at least one TCP data packet, the first node device may send a notification message to the second node device. The notification message is used to indicate that the last TCP data packet in the at least one TCP data packet includes indication information, and the indication information is used to indicate that the last TCP data packet is the last TCP data packet corresponding to the protocol frame.

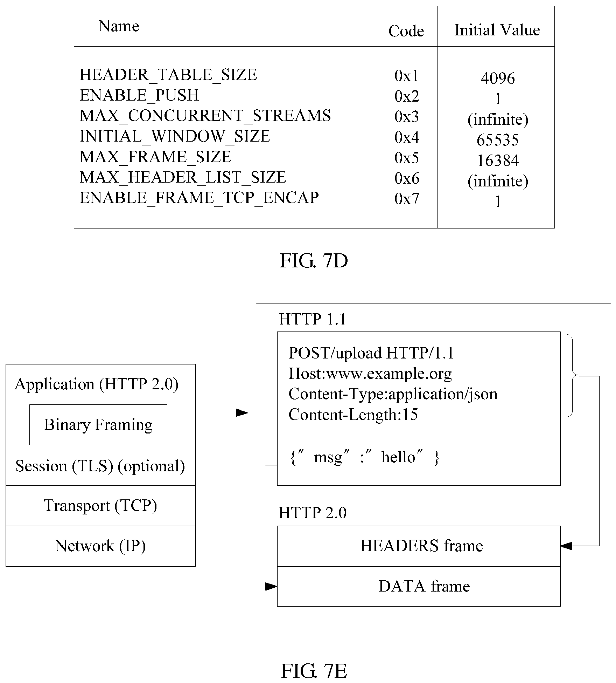

A schematic interface diagram of a setting frame shown in FIG. 7D is used as an example. The first node device may extend the setting frame, that is, add an "ENABLE_FRAME_TCP_ENCAP 0x7 1" field to the setting frame. After receiving the setting frame, the second node device may determine an encapsulation manner of the first node device according to the field, and then encapsulate a protocol frame that is to be sent to the first node device into at least one TCP data packet in the encapsulation manner. The last TCP data packet in the at least one TCP data packet includes indication information, and the indication information is used to indicate that the last TCP data packet is the last TCP data packet corresponding to the protocol frame.

A schematic structural diagram of an HTTP frame shown in FIG. 7E is used as an example. An HTTP 2.0 frame may include HEADERS (a header field) and DATA (a data field), and header information of an HTTP 1.1 frame is encapsulated in the header field. The first node device may add a "TCP-Encapsulation: frame" field to the HTTP 2.0 header field, and send the HTTP frame to which the field is added to the second node device. After receiving the HTTP frame to which the field is added, the second node device adds the field to an HTTP 2.0 header field of a to-be-sent HTTP frame, and sends the to-be-sent HTTP frame to which the field is added to the first node device. The first node device and the second node device agree to encapsulate a protocol frame in the foregoing encapsulation manner, so that the protocol frame is encapsulated into at least one TCP data packet. The last TCP data packet in the at least one TCP data packet includes indication information, and the indication information is used to indicate that the last TCP data packet is the last TCP data packet corresponding to the protocol frame.

In an optional embodiment, a header of the at least one TCP data packet may include data type information, and the data type information is used to indicate a data type of the data part of the TCP data packet.

For example, in FIG. 7C, the first node device may add data type information to an option field of a TCP data packet that includes data, and the data type information is used to indicate a data type of a data part of the TCP data packet. The data type of the data part of the TCP data packet may be indicated by using multiple bits that are set by means of negotiation. For example, the data type information may be 0001, and is used to indicate that the data type of the data part of the TCP data packet is a text or html; the data type information may be 0010, and is used to indicate that the data type of the data part of the TCP data packet is an image or jpeg; or the data type information may be 0011, and is used to indicate that the data type of the data part of the TCP data packet is a video or mp4, that is, audio.

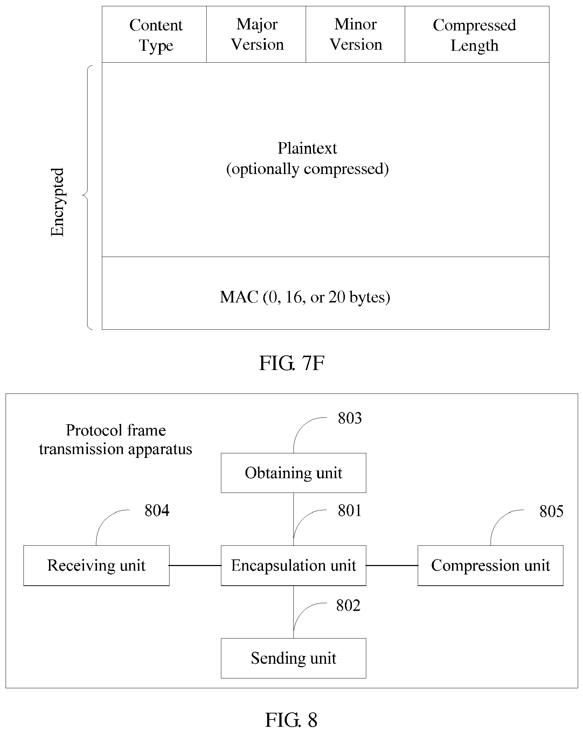

For example, when a protocol frame is a TLS frame, a format of the TLS frame may be shown in FIG. 7F. The first node device may add data type information to a ContentType field of the TLS frame, and the data type information is used to indicate a data type of the TLS frame. Further, when encapsulating the TLS frame into at least one TCP data packet, the first node device may add data type information to a header of the at least one TCP data packet. The data type information is used to indicate a data type of a data part of the TCP data packet.

S302. The first node device sends the at least one TCP data packet to the first base station.

The first node device may send the at least one TCP data packet to the first base station. For example, the first node device may send a TCP1 data packet to the first base station.

S303. The first base station sends the at least one TCP data packet to the second node device.

The first base station may send, to the second node device, the at least one TCP data packet sent by the first node device. For example, the first base station may send the TCP1 data packet to the second node device.

S304. Hand over from the first base station to the second base station.

The first base station is switched to the second base station after sending the TCP1 data packet to the second node device. For example, if the second node device moves from one cell to another, a signal transmitted by the first base station covers a first cell, and a signal transmitted by the second base station covers a second cell, a link between the second node device and the first base station is switched to a link between the second node device and the second base station, so that communication continuity is ensured. For another example, to avoid co-channel interference in a same cell, the second node device is handed over from one radio channel to another, that is, a link between the second node device and the first base station is switched to a link between the second node device and the second base station.

S305. The first node device sends the at least one TCP data packet to the second base station.

After being handed over from the first base station to the second base station, the first node device may send the at least one TCP data packet to the second base station. For example, after sending the TCP1 data packet to the first base station, the first node device may send a TCP2 data packet, a TCP3 data packet, a TCP4 data packet, and the like to the second base station.

In an optional embodiment, a header of the last TCP data packet corresponding to the protocol frame may include a sending sequence number and an acknowledgement sequence number. The sending sequence number is the same as a sending sequence number of a start TCP data packet corresponding to a next protocol frame, and the acknowledgement sequence number is determined according to received data sent by the second base station.

During specific implementation, the sending sequence number of the TCP data packet is a sum of a sending sequence number of a previous TCP data packet and a data part length of the previous TCP data packet. A sending sequence number of the TCP4 data packet is a sum of a sending sequence number of the TCP3 data packet and a data part length of the TCP3 data packet. If a data part length of the TCP4 data packet is 0, a sending sequence number of a TCP5 data packet is the sending sequence number of the TCP4 data packet. That is, one TCP data packet is added after the last TCP data packet that is corresponding to a first protocol frame and that includes data, and a sending sequence number of the added TCP data packet is the same as a sending sequence number of a start TCP data packet corresponding to a next protocol frame.

During specific implementation, after the first node device sends the TCP2 data packet to the second base station, the second base station returns an acknowledgement sequence number of the TCP2 data packet to the first node device, to indicate that the second base station correctly receives the TCP2 data packet. The first node device generates an acknowledgement sequence number of the TCP3 data packet. The acknowledgement sequence number of the TCP3 data packet is obtained by adding 1 to the acknowledgement sequence number of the TCP2 data packet. That is, one TCP data packet is added after the last TCP data packet that is corresponding to the first protocol frame and that includes data, and an acknowledgement sequence number of the added TCP data packet is determined according to received data sent by the second base station.

In an optional embodiment, before sending the at least one TCP data packet to the second base station, the first node device may send a notification message to the second base station. The notification message is used to indicate that the last TCP data packet in the at least one TCP data packet includes indication information, and the indication information is used to indicate that the last TCP data packet is the last TCP data packet corresponding to the protocol frame, so that the second base station obtains, according to the notification message, the TCP data packet whose data part length is 0.

S306. The second base station determines that a next TCP data packet of the TCP data packet whose data part length is 0 is a start TCP data packet corresponding to a next protocol frame.

After receiving the at least one TCP data packet sent by the first node device, the second base station may determine whether there is a TCP data packet whose data part length is 0, and when there is a TCP data packet whose data part length is 0, determine that a next TCP data packet is the start TCP data packet corresponding to the next protocol frame. For example, if the second base station determines that the data part length of the TCP4 data packet is 0, the second base station may determine that the TCP5 data packet is a start TCP data packet corresponding to a second protocol frame.

In an optional embodiment, the first node device may send the notification message to the second base station. The notification message is used to indicate that the last TCP data packet in the at least one TCP data packet includes the indication information, and the indication information is used to indicate that the last TCP data packet is the last TCP data packet corresponding to the protocol frame. During specific implementation, after receiving the notification message, the second base station may learn a protocol frame encapsulation manner of the first node device, then obtain, according to the notification message, the indication information in the last TCP data packet corresponding to the protocol frame, and determine, according to the indication information, that the next TCP data packet of the TCP data packet whose data part length is 0 is the start TCP data packet corresponding to the next protocol frame.

S307. The second base station performs data parsing on the next protocol frame from the start TCP data packet.

After determining the start TCP data packet corresponding to the next protocol frame, the second base station may perform data parsing on the next protocol frame from the start TCP data packet. For example, the second base station may parse a frame header and a payload of the second protocol frame from the TCP5 data packet, and recognize a data type of the second protocol frame according to data in the payload.

In an optional embodiment, the header of the at least one TCP data packet may include the data type information, and the second base station may obtain the data type of the data part of the TCP data packet according to the data type information, to obtain a data type of the next protocol frame.

In an optional embodiment, before performing data parsing on the next protocol frame from the start TCP data packet, the second base station may determine that a header field of the next protocol frame is compressed by using a static table. During specific implementation, if the header field of the protocol frame is compressed by using a dynamic table, the first base station maintains the dynamic table. When the first base station is switched to the second base station, the second base station cannot obtain the dynamic table, and therefore, cannot perform data parsing on the next protocol frame. In this embodiment of the present invention, data parsing is performed on the next protocol frame after it is determined that the header field of the next protocol frame is compressed by using the static table, so that data parsing efficiency can be improved.

In an optional embodiment, all TCP data packets corresponding to the next protocol frame belong to a same HTPP 2.0 stream. After the second base station performs data parsing on the next protocol frame from the start TCP data packet, when data parsing performed on the next protocol frame fails, the second base station suspends data parsing performed on a protocol frame included in the HTTP 2.0 stream. For example, the second node device divides an image into multiple protocol frames, the multiple protocol frames belong to a same HTPP 2.0 stream, and a data type of each protocol frame is an image. The first node device encapsulates each protocol frame into at least one TCP data packet, and after the first node device sends the at least one TCP data packet to the second base station, when the second base station learns, by means of parsing, that a data type of one of the protocol frames is a video, the second base station also learns, by means of parsing, that a data type of another protocol frame in the HTPP 2.0 stream is a video. In this embodiment of the present invention, when data parsing performed on the protocol frame fails, data parsing performed on another protocol frame included in the HTTP 2.0 stream is suspended, so that data parsing efficiency can be improved.

S308. The second base station sends a TCP data packet obtained after the data parsing to the second node device.

In the protocol frame transmission method shown in FIG. 3, the first node device encapsulates the protocol frame into the at least one TCP data packet, where the data part length of the last TCP data packet in the at least one TCP data packet is 0; the first base station is switched to the second base station; the first node device sends the at least one TCP data packet to the second base station; and the second base station determines that the next TCP data packet of the TCP data packet whose data part length is 0 is the start TCP data packet corresponding to the next protocol frame, then performs data parsing on the next protocol frame from the start TCP data packet, and sends the TCP data packet obtained after the data parsing to the second node device. In this way, it can be ensured that a data part of one TCP data packet includes data of only one protocol frame, so that the second base station effectively recognizes a boundary of a next protocol frame, to perform data parsing on the next protocol frame.

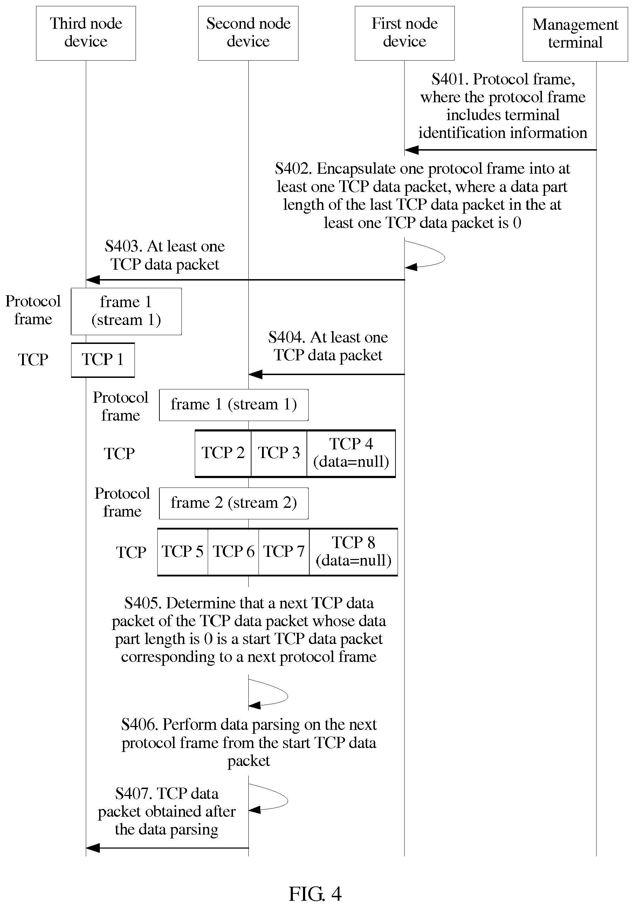

Referring to FIG. 4, FIG. 4 is a schematic flowchart of a protocol frame transmission method according to a third embodiment of the present invention. In this embodiment of the present invention, when a management terminal sends a protocol frame to a third node device by using a first node device, a second node device joins in real time. The second node device performs data parsing on a TCP data packet sent by the first node device, and sends the TCP data packet obtained after the data parsing to the third node device. The second node device may be a router, a packet gateway node, a serving gateway node, or the like. When the management terminal is a server, the first node device may be an agent server, and the third node device may be a client. When the management terminal is a client, the first node device may be an agent client, and the second node device may be a server. This is not specifically limited in this embodiment of the present invention. As shown in the figure, the protocol frame transmission method in this embodiment of the present invention may include the following steps.

S401. The management terminal sends a protocol frame to the first node device, where the protocol frame includes terminal identification information.

The management terminal may send the protocol frame to the first node device. The protocol frame includes the terminal identification information, and the terminal identification information is used to instruct to send at least one TCP data packet corresponding to the protocol frame to a node device corresponding to the terminal identification information, that is, the third node device.

S402. The first node device encapsulates one protocol frame into at least one TCP data packet, where a data part length of the last TCP data packet in the at least one TCP data packet is 0.

S403. The first node device sends the at least one TCP data packet to the third node device.

The first node device may send the at least one TCP data packet to the third node device. For example, the first node device may send a TCP1 data packet to the third node device.

S404. The first node device sends the at least one TCP data packet to the second node device.

After the first node device sends the TCP1 data packet to the third node device, the second node device that has a data parsing requirement joins in real time, and the first node device sends a TCP2 data packet, a TCP3 data packet, a TCP4 data packet, and the like to the second node device.

In an optional embodiment, a header of the last TCP data packet corresponding to the protocol frame may include a sending sequence number and an acknowledgement sequence number. The sending sequence number is the same as a sending sequence number of a start TCP data packet corresponding to a next protocol frame, and the acknowledgement sequence number is the same as an acknowledgement sequence number of a previous data packet of the last TCP data packet.

During specific implementation, the sending sequence number of the TCP data packet is a sum of a sending sequence number of a previous TCP data packet and a data part length of the previous TCP data packet. A sending sequence number of the TCP4 data packet is a sum of a sending sequence number of the TCP3 data packet and a data part length of the TCP3 data packet. If a data part length of the TCP4 data packet is 0, a sending sequence number of a TCP5 data packet is the sending sequence number of the TCP4 data packet. That is, one TCP data packet is added after the last TCP data packet that is corresponding to a first protocol frame and that includes data, and a sending sequence number of the added TCP data packet is the same as a sending sequence number of a start TCP data packet corresponding to a next protocol frame.

During specific implementation, the first node device is an agent client or an agent server. The first node device sends a TCP data packet to the second node device, the second node device sends an acknowledgement sequence number of the TCP data packet to the management terminal after receiving the TCP data packet, and the first node device cannot determine whether the second node device receives the TCP data packet. In this case, one TCP data packet is added after the last TCP data packet that is corresponding to the first protocol frame and that includes data, and an acknowledgement sequence number of the added TCP data packet is the same as an acknowledgement sequence number of the last TCP data packet that includes data.

S405. The second node device determines that a next TCP data packet of the TCP data packet whose data part length is 0 is a start TCP data packet corresponding to a next protocol frame.

S406. The second node device performs data parsing on the next protocol frame from the start TCP data packet.

S407. The second node device sends a TCP data packet obtained after the data parsing to the third node device.

In the protocol frame transmission method shown in FIG. 4, the first node device encapsulates the protocol frame sent by the management terminal into the at least one TCP data packet, where the data part length of the last TCP data packet in the at least one TCP data packet is 0; the first node device sends the at least one TCP data packet to the second node device; and the second node device determines that the next TCP data packet of the TCP data packet whose data part length is 0 is the start TCP data packet corresponding to the next protocol frame, then performs data parsing on the next protocol frame from the start TCP data packet, and sends the TCP data packet obtained after the data parsing to the third node device. In this way, it can be ensured that a data part of one TCP data packet includes data of only one protocol frame, so that the second node device effectively recognizes a boundary of a next protocol frame, to perform data parsing on the next protocol frame.

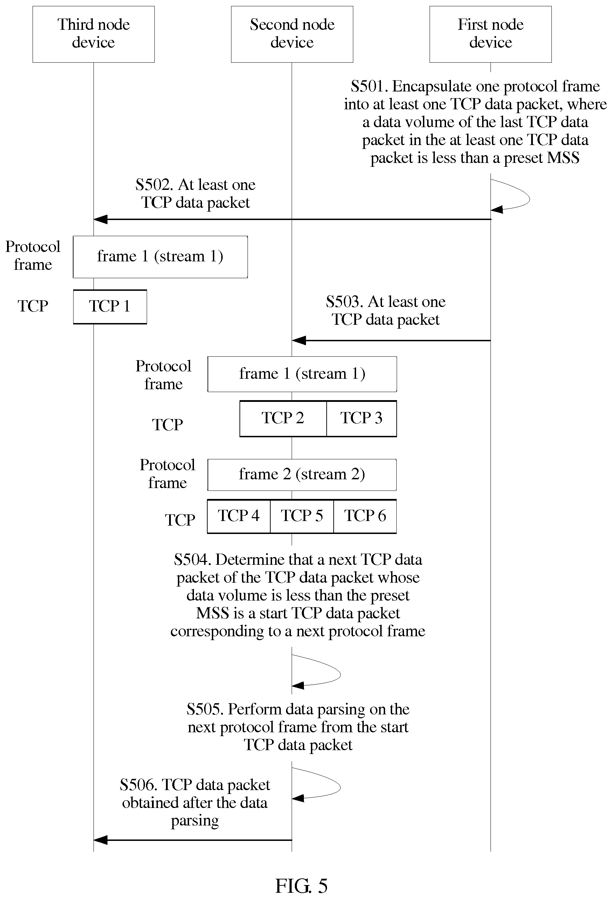

Referring to FIG. 5, FIG. 5 is a schematic flowchart of a protocol frame transmission method according to a fourth embodiment of the present invention. As shown in the figure, the protocol frame transmission method in this embodiment of the present invention may include the following steps.

S501. A first node device encapsulates one protocol frame into at least one TCP data packet, where a data volume of the last TCP data packet in the at least one TCP data packet is less than a preset MSS.

The first node device may encapsulate the protocol frame into the at least one TCP data packet. The data volume of the last TCP data packet in the at least one TCP data packet is less than the preset MSS, to indicate that the last TCP data packet is the last TCP data packet corresponding to the protocol frame. For example, if a data volume of a protocol frame is 4000 bytes, and a preset MSS agreed on by the first node device and a third node device is 1460 bytes, the first node device may encapsulate the protocol frame into three TCP data packets. A data part length of a TCP1 data packet is 1460 bytes, a data part length of a TCP2 data packet is 1460 bytes, and a data part length of a TCP3 data packet is 1080 bytes.

S502. The first node device sends the at least one TCP data packet to a third node device.

S503. The first node device sends the at least one TCP data packet to a second node device.

S504. The second node device determines that a next TCP data packet of the TCP data packet whose data volume is less than the preset MSS is a start TCP data packet corresponding to a next protocol frame.

S505. The second node device performs data parsing on the next protocol frame from the start TCP data packet.

S506. The second node device sends a TCP data packet obtained after the data parsing to the third node device.

In the protocol frame transmission method shown in FIG. 5, the first node device encapsulates the protocol frame into the at least one TCP data packet, where the data volume of the last TCP data packet in the at least one TCP data packet is less than the preset MSS; the first node device sends the at least one TCP data packet to the second node device; and the second node device determines that the next TCP data packet of the TCP data packet whose data volume is less than the preset MSS is the start TCP data packet corresponding to the next protocol frame, then performs data parsing on the next protocol frame from the start TCP data packet, and sends the TCP data packet obtained after the data parsing to the third node device. In this way, it can be ensured that a data part of one TCP data packet includes data of only one protocol frame, so that the second node device effectively recognizes a boundary of a next protocol frame, to perform data parsing on the next protocol frame.

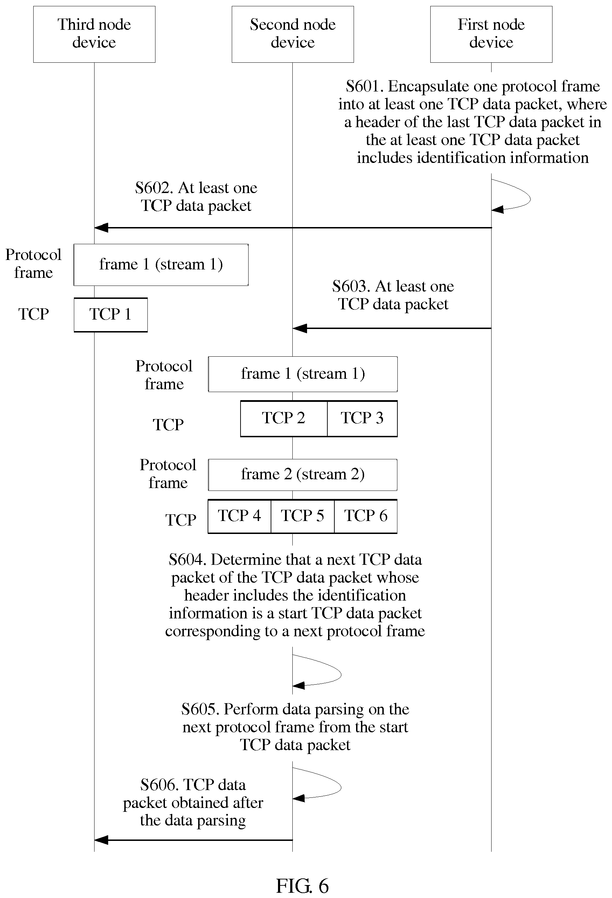

Referring to FIG. 6, FIG. 6 is a schematic flowchart of a protocol frame transmission method according to a fifth embodiment of the present invention. As shown in the figure, the protocol frame transmission method in this embodiment of the present invention may include the following steps.

S601. A first node device encapsulates one protocol frame into at least one TCP data packet, where a header of the last TCP data packet in the at least one TCP data packet includes identification information.

The first node device may encapsulate the protocol frame into the at least one TCP data packet. The header of the last TCP data packet in the at least one TCP data packet includes the identification information, to indicate that the last TCP data packet is the last TCP data packet corresponding to the protocol frame. For example, if a data volume of a protocol frame is 4000 bytes, and a preset MSS agreed on by the first node device and a third node device is 1460 bytes, the first node device may encapsulate the protocol frame into three TCP data packets. A data part length of a TCP1 data packet is 1460 bytes, a data part length of a TCP2 data packet is 1460 bytes, and a data part length of a TCP3 data packet is 1080 bytes. The first node device adds identification information to a header of the TCP3 data packet.

For example, in FIG. 7C, the first node device may add identification information to an option field of the last TCP data packet corresponding to a protocol frame, to indicate that the TCP data packet is the last TCP data packet corresponding to the protocol frame.

S602. The first node device sends the at least one TCP data packet to a third node device.

S603. The first node device sends the at least one TCP data packet to a second node device.

S604. The second node device determines that a next TCP data packet of the TCP data packet whose header includes the identification information is a start TCP data packet corresponding to a next protocol frame.

S605. The second node device performs data parsing on the next protocol frame from the start TCP data packet.

S606. The second node device sends a TCP data packet obtained after the data parsing to the third node device.

In the protocol frame transmission method shown in FIG. 6, the first node device encapsulates the protocol frame into the at least one TCP data packet, where the header of the last TCP data packet in the at least one TCP data packet includes the identification information; the first node device sends the at least one TCP data packet to the second node device; and the second node device determines that the next TCP data packet of the TCP data packet whose header includes the identification information is the start TCP data packet corresponding to the next protocol frame, then performs data parsing on the next protocol frame from the start TCP data packet, and sends the TCP data packet obtained after the data parsing to the third node device. In this way, it can be ensured that a data part of one TCP data packet includes data of only one protocol frame, so that the second node device effectively recognizes a boundary of a next protocol frame, to perform data parsing on the next protocol frame.

An embodiment of the present invention further provides a computer storage medium. The computer storage medium may store a program. When the program runs, all or some steps in the method embodiments shown in FIG. 1 and FIG. 3 to FIG. 6 are performed.

An embodiment of the present invention further provides a computer storage medium. The computer storage medium may store a program. When the program runs, all or some steps in the method embodiments shown in FIG. 2 to FIG. 6 are performed.

Referring to FIG. 8, FIG. 8 is a schematic structural diagram of a protocol frame transmission apparatus according to an embodiment of the present invention. The protocol frame transmission apparatus may be configured to perform all or some steps in the method embodiments shown in FIG. 1, or FIG. 3 to FIG. 6, and the protocol frame transmission apparatus may include at least an encapsulation unit 801 and a sending unit 802.

The encapsulation unit 801 is configured to encapsulate one protocol frame into at least one TCP data packet, where the last TCP data packet in the at least one TCP data packet may include indication information, and the indication information may be used to indicate that the last TCP data packet is the last TCP data packet corresponding to the protocol frame.

The sending unit 802 is configured to send the at least one TCP data packet to a node device.

In an optional embodiment, a data part length of the last TCP data packet may be 0, to indicate that the last TCP data packet is the last TCP data packet corresponding to the protocol frame.

Further optionally, a header of the last TCP data packet may include a sending sequence number and an acknowledgement sequence number. The sending sequence number is the same as a sending sequence number of a start TCP data packet corresponding to a next protocol frame, and the acknowledgement sequence number is determined according to received data sent by the node device.

Further optionally, a header of the last TCP data packet may include a sending sequence number and an acknowledgement sequence number. The sending sequence number is the same as a sending sequence number of a start TCP data packet corresponding to a next protocol frame, and the acknowledgement sequence number is the same as an acknowledgement sequence number of a previous data packet of the last TCP data packet.

Further optionally, the protocol frame transmission apparatus in this embodiment of the present invention may further include:
an obtaining unit 803, configured to: before the encapsulation unit 801 encapsulates the protocol frame into the at least one TCP data packet, obtain the protocol frame sent by a management terminal, where the protocol frame may include terminal identification information, and the terminal identification information may be used to instruct to send the at least one TCP data packet corresponding to the protocol frame to the node device corresponding to the terminal identification information.

Further optionally, the encapsulation unit 801 is configured to: when a data volume of the last TCP data packet that is corresponding to the protocol frame and that includes data is equal to a preset MSS, add one TCP data packet after the last TCP data packet that includes data, where a data part length of the added TCP data packet may be 0.

In an optional embodiment, when a data volume of the last TCP data packet that is corresponding to the protocol frame and that includes data is less than a preset MSS, the last TCP data packet that includes data includes only data of the protocol frame, and the indication information may be the data volume of the last TCP data packet that includes data.

In an optional embodiment, the indication information may be identification information included in a header of the last TCP data packet.

In an optional embodiment, a data part of the at least one TCP data packet includes only data of the protocol frame.

In an optional embodiment, the protocol frame transmission apparatus in this embodiment of the present invention may further include:
a receiving unit 804, configured to receive a TCP data packet sent by the node device.

The encapsulation unit 801 is configured to add, to a to-be-sent TCP data packet in the at least one TCP data packet, an acknowledgement sequence number of the TCP data packet sent by the node device, where the acknowledgement sequence number may be used to indicate that the TCP data packet sent by the node device is correctly received.

In an optional embodiment, the sending unit 802 is further configured to send a notification message to the node device before the encapsulation unit 801 encapsulates the protocol frame into the at least one TCP data packet, where the notification message may be used to indicate that the last TCP data packet in the at least one TCP data packet includes the indication information, and the indication information may be used to indicate that the last TCP data packet is the last TCP data packet corresponding to the protocol frame.

Further optionally, the notification information may be carried in an HTTP 2.0 setting frame or an HTTP 2.0 header field of the protocol frame.

In an optional embodiment, a header of the at least one TCP data packet may include data type information, and the data type information may be used to indicate a data type of the data part of the TCP data packet.

In an optional embodiment, the protocol frame may be a TLS frame or an HTTP frame.

In an optional embodiment, the protocol frame transmission apparatus in this embodiment of the present invention may further include:
a compression unit 805, configured to compress the protocol frame into at least one compressed package before the encapsulation unit encapsulates the protocol frame into the at least one TCP data packet, where the at least one compressed package includes only the protocol frame.

In the protocol frame transmission apparatus shown in FIG. 8, the encapsulation unit 801 encapsulates the protocol frame into the at least one TCP data packet, where the last TCP data packet in the at least one TCP data packet includes the indication information, and the indication information is used to indicate that the last TCP data packet is the last TCP data packet corresponding to the protocol frame; and the sending unit 802 sends the at least one TCP data packet to the node device. In this way, it can be ensured that a data part of one TCP data packet includes data of only one protocol frame.

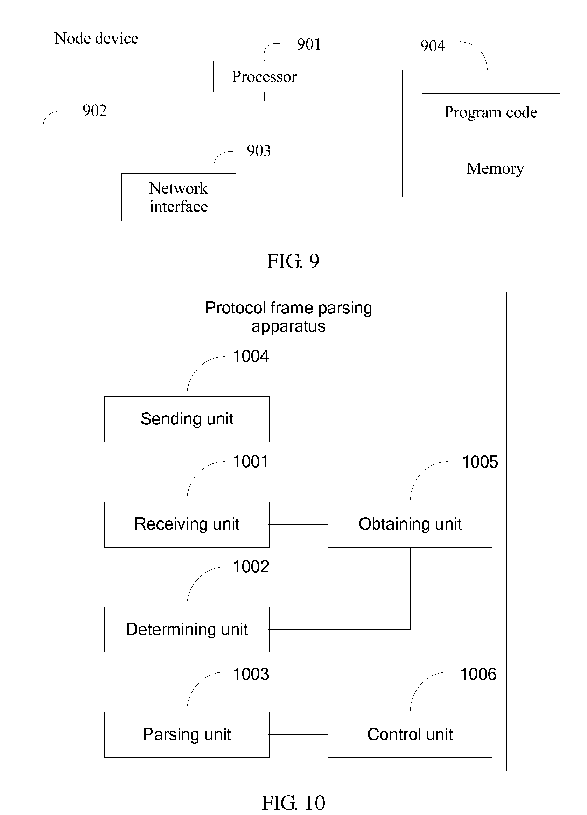

Referring to FIG. 9, FIG. 9 is a schematic structural diagram of a node device according to a first embodiment of the present invention. The node device provided in this embodiment of the present invention may be configured to implement the methods implemented in the embodiments of the present invention shown in FIG. 1, or FIG. 3 to FIG. 6. For ease of description, only a part related to this embodiment of the present invention is shown. For undisclosed technical details, refer to the embodiments of the present invention shown in FIG. 1, or FIG. 3 to FIG. 6.

As shown in FIG. 9, the node device includes at least one processor 901 such as a CPU, at least one network interface 903, a memory 904, and at least one communications bus 902. The communications bus 902 is configured to implement connections and communication between these components. Optionally, the network interface 903 may include a standard wired interface and a standard wireless interface (for example, a WI-FI interface), and is configured to communicate with an external network. The memory 904 may include a high-speed RAM, and may further include a non-volatile memory (non-volatile memory), for example, at least one disk memory. Optionally, the memory 904 may include at least one storage apparatus that is far away from the processor 901. The processor 901 may be the protocol frame transmission apparatus shown in FIG. 8. The memory 904 stores a set of program code, and the processor 901 invokes the program code stored in the memory 904, to perform the following operations:
encapsulating one protocol frame into at least one Transmission Control Protocol TCP data packet, where the last TCP data packet in the at least one TCP data packet may include indication information, and the indication information may be used to indicate that the last TCP data packet is the last TCP data packet corresponding to the protocol frame; and
sending the at least one TCP data packet to a node device by using the network interface 903.

In an optional embodiment, a data part length of the last TCP data packet may be 0, to indicate that the last TCP data packet is the last TCP data packet corresponding to the protocol frame.

Further optionally, a header of the last TCP data packet may include a sending sequence number and an acknowledgement sequence number. The sending sequence number is the same as a sending sequence number of a start TCP data packet corresponding to a next protocol frame, and the acknowledgement sequence number is determined according to received data sent by the node device.

Further optionally, a header of the last TCP data packet may include a sending sequence number and an acknowledgement sequence number. The sending sequence number is the same as a sending sequence number of a start TCP data packet corresponding to a next protocol frame, and the acknowledgement sequence number is the same as an acknowledgement sequence number of a previous data packet of the last TCP data packet.

Further optionally, before encapsulating the protocol frame into the at least one TCP data packet, the processor 901 may further perform the following operation:
obtaining, by using the network interface 903, the protocol frame sent by a management terminal, where the protocol frame may include terminal identification information, and the terminal identification information may be used to instruct to send the at least one TCP data packet corresponding to the protocol frame to the node device corresponding to the terminal identification information.

Further optionally, the encapsulating, by the processor 901, one protocol frame into at least one TCP data packet may be specifically:
when a data volume of the last TCP data packet that is corresponding to the protocol frame and that includes data is equal to a preset maximum segment size MSS, adding one TCP data packet after the last TCP data packet that includes data, where a data part length of the added TCP data packet may be 0.

In an optional embodiment, the encapsulating, by the processor 901, one protocol frame into at least one TCP data packet may be specifically:
when a data volume of the last TCP data packet that is corresponding to the protocol frame and that includes data is less than a preset MSS, the last TCP data packet that includes data includes only data of the protocol frame, and the indication information is the data volume of the last TCP data packet that includes data.

In an optional embodiment, the indication information may be identification information included in a header of the last TCP data packet.

In an optional embodiment, a data part of the at least one TCP data packet includes only data of the protocol frame.

In an optional embodiment, before sending the at least one TCP data packet to the node device by using the network interface 903, the processor 901 may further perform the following operation:
receiving, by using the network interface 903, a TCP data packet sent by the node device.

The encapsulating, by the processor 901, one protocol frame into at least one TCP data packet may be specifically:
adding, to a to-be-sent TCP data packet in the at least one TCP data packet, an acknowledgement sequence number of the TCP data packet sent by the node device, where the acknowledgement sequence number may be used to indicate that the TCP data packet sent by the node device is correctly received.

In an optional embodiment, before encapsulating the protocol frame into the at least one TCP data packet, the processor 901 may further perform the following operation:
sending a notification message to the node device by using the network interface 903, where the notification message may be used to indicate that the last TCP data packet in the at least one TCP data packet includes the indication information, and the indication information may be used to indicate that the last TCP data packet is the last TCP data packet corresponding to the protocol frame.

Further optionally, the notification message may be carried in an HTTP 2.0 setting frame or an HTTP 2.0 header field of the protocol frame.

In an optional embodiment, a header of the at least one TCP data packet may include data type information, and the data type information may be used to indicate a data type of the data part of the TCP data packet.

In an optional embodiment, the protocol frame may be a TLS frame or an HTTP frame.

In an optional embodiment, before encapsulating the protocol frame into the at least one TCP data packet, the processor 901 may further perform the following operation:
compressing the protocol frame into at least one compressed package, where the at least one compressed package includes only the protocol frame.

Specifically, the terminal described in this embodiment of the present invention may be configured to implement some or all procedures in the method embodiments described in the present invention with reference to FIG. 1, or FIG. 3 to FIG. 6.

Referring to FIG. 10, FIG. 10 is a schematic structural diagram of a protocol frame parsing apparatus according to an embodiment of the present invention. The protocol frame parsing apparatus may be configured to perform all or some steps in the method embodiments shown in FIG. 2 to FIG. 6, and the protocol frame parsing apparatus may include at least a receiving unit 1001, a determining unit 1002, and a parsing unit 1003.

The receiving unit 1001 is configured to receive at least one TCP data packet that is sent by a node device and that is obtained by encapsulating one protocol frame, where the last TCP data packet in the at least one TCP data packet may include indication information, and the indication information may be used to indicate that the last TCP data packet is the last TCP data packet corresponding to the protocol frame.

The determining unit 1002 is configured to determine, according to the indication information, a start TCP data packet corresponding to a next protocol frame.

The parsing unit 1003 is configured to perform data parsing on the next protocol frame from the start TCP data packet.

In an optional embodiment, the determining unit 1002 is configured to: when a data part length of the last TCP data packet is 0, determine that a next TCP data packet is the start TCP data packet corresponding to the next protocol frame.

In an optional embodiment, the determining unit 1002 is configured to: when a data volume of the last TCP data packet is less than a preset MSS, determine that a next TCP data packet is the start TCP data packet corresponding to the next protocol frame.

In an optional embodiment, the determining unit 1002 is configured to: when a header of the last TCP data packet includes identification information, determine that a next TCP data packet is the start TCP data packet corresponding to the next protocol frame.

In an optional embodiment, the protocol frame parsing apparatus in this embodiment of the present invention may further include:
a sending unit 1004, configured to send a TCP data packet to the node device before the receiving unit 1001 receives the at least one TCP data packet sent by the node device.

The determining unit 1002 is further configured to: when the received TCP data packet carries an acknowledgement sequence number of the TCP data packet sent to the node device, determine, according to the acknowledgement sequence number, that the node device correctly receives the TCP data packet sent to the node device.

In an optional embodiment, the receiving unit 1001 is further configured to: before the determining unit 1002 determines, according to the indication information, the start TCP data packet corresponding to the next protocol frame, receive a notification message sent by the node device.

The protocol frame parsing apparatus in this embodiment of the present invention may further include:
an obtaining unit 1005, configured to obtain, according to the notification information, the indication information in the last TCP data packet corresponding to the protocol frame.

In an optional embodiment, a header of the at least one TCP data packet may include data type information, and the parsing unit 1003 is configured to obtain a data type of a data part of the TCP data packet according to the data type information.

In an optional embodiment, the determining unit 1002 is further configured to: before the parsing unit 1003 performs data parsing on the next protocol frame from the start TCP data packet, determine that a header field of the next protocol frame is compressed by using a static table.

In an optional embodiment, all TCP data packets corresponding to the next protocol frame belong to a same HTTP 2.0 stream, and the protocol frame transmission apparatus in this embodiment of the present invention may further include:
a control unit 1006, configured to: after the parsing unit 1003 performs data parsing on the next protocol frame from the start TCP data packet, when data parsing performed on the next protocol frame fails, suspend data parsing performed on a protocol frame included in the HTTP 2.0 stream.

In the protocol frame parsing apparatus shown in FIG. 10, the receiving unit 1001 receives the at least one TCP data packet that is sent by the node device and that is obtained by encapsulating the protocol frame, where the last TCP data packet in the at least one TCP data packet includes the indication information, and the indication information is used to indicate that the last TCP data packet is the last TCP data packet corresponding to the protocol frame; the determining unit 1002 determines, according to the indication information, the start TCP data packet corresponding to the next protocol frame; and the parsing unit 1003 performs data parsing on the next protocol frame from the start TCP data packet. In this way, a boundary of the next protocol frame can be effectively recognized, so that data parsing can be performed on the next protocol frame.

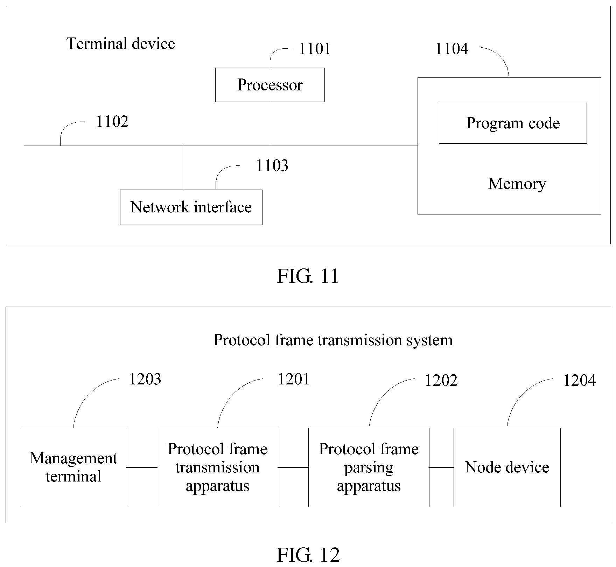

Referring to FIG. 11, FIG. 11 is a schematic structural diagram of a node device according to a second embodiment of the present invention. The node device provided in this embodiment of the present invention may be configured to implement the methods implemented in the embodiments of the present invention shown in FIG. 2 to FIG. 6. For ease of description, only a part related to this embodiment of the present invention is shown. For undisclosed technical details, refer to the embodiments of the present invention shown in FIG. 2 to FIG. 6.

As shown in FIG. 11, the terminal device includes at least one processor 1101 such as a CPU, at least one network interface 1103, a memory 1104, and at least one communications bus 1102. The communications bus 1102 is configured to implement connections and communication between these components. Optionally, the network interface 1103 may include a standard wired interface and a standard wireless interface (for example, a WI-FI interface), and is configured to communicate with an external network. The memory 1104 may include a high-speed RAM, and may further include a non-volatile memory, for example, at least one disk memory. Optionally, the memory 1104 may include at least one storage apparatus that is far away from the processor 1101. The processor 1101 may be the protocol frame parsing apparatus shown in FIG. 10. The memory 1104 stores a set of program code, and the processor 1101 invokes the program code stored in the memory 1104, to perform the following operations:
receiving, by using the network interface 1103, at least one TCP data packet that is sent by a node device and that is obtained by encapsulating one protocol frame, where the last TCP data packet in the at least one TCP data packet may include indication information, and the indication information may be used to indicate that the last TCP data packet is the last TCP data packet corresponding to the protocol frame;
determining, according to the indication information, a start TCP data packet corresponding to a next protocol frame; and
performing data parsing on the next protocol frame from the start TCP data packet.

In an optional embodiment, the determining, by the processor 1101 according to the indication information, a start TCP data packet corresponding to a next protocol frame may be specifically:
when a data part length of the last TCP data packet is 0, determining that a next TCP data packet is the start TCP data packet corresponding to the next protocol frame.

In an optional embodiment, the determining, by the processor 1101 according to the indication information, a start TCP data packet corresponding to a next protocol frame may be specifically:
when a data volume of the last TCP data packet is less than a preset MSS, determining that a next TCP data packet is the start TCP data packet corresponding to the next protocol frame.

In an optional embodiment, the determining, by the processor 1101 according to the indication information, a start TCP data packet corresponding to a next protocol frame may be specifically:
when a header of the last TCP data packet includes identification information, determining that a next TCP data packet is the start TCP data packet corresponding to the next protocol frame.

In an optional embodiment, before receiving, by using the network interface 1103, the at least one TCP data packet that is sent by the node device and that is obtained by encapsulating the protocol frame, the processor 1101 may further perform the following operation:
sending a TCP data packet to the node device by using the network interface 1103.

After receiving, by using the network interface 1103, the at least one TCP data packet that is sent by the node device and that is obtained by encapsulating the protocol frame, the processor 1101 may further perform the following operation:
when the received TCP data packet carries an acknowledgement sequence number of the TCP data packet sent to the node device, determining, according to the acknowledgement sequence number, that the node device correctly receives the TCP data packet sent to the node device.

In an optional embodiment, before determining, according to the indication information, the start TCP data packet corresponding to the next protocol frame, the processor 1101 may further perform the following operations:
receiving, by using the network interface 1103, a notification message sent by the node device; and
obtaining, according to the notification message, the indication information in the last TCP data packet corresponding to the protocol frame.

In an optional embodiment, a header of the at least one TCP data packet may include data type information, and the performing, by the processor 1101, data parsing on the next protocol frame from the start TCP data packet may be specifically:
obtaining a data type of a data part of the TCP data packet according to the data type information.

In an optional embodiment, before performing data parsing on the next protocol frame from the start TCP data packet, the processor 1101 may further perform the following operation:
determining that a header field of the next protocol frame is compressed by using a static table.

In an optional embodiment, all TCP data packets corresponding to the next protocol frame belong to a same HTPP 2.0 stream, and after performing data parsing on the next protocol frame from the start TCP data packet, the processor 1101 may further perform the following operation:
when data parsing performed on the next protocol frame fails, suspending data parsing performed on a protocol frame included in the HTTP 2.0 stream.

Specifically, the terminal described in this embodiment of the present invention may be configured to implement some or all procedures in the method embodiments described in the present invention with reference to FIG. 2 to FIG. 6.

Referring to FIG. 12, FIG. 12 is a schematic structural diagram of a protocol frame transmission system according to an embodiment of the present invention. As shown in the figure, the communications system in this embodiment of the present invention may include at least a protocol frame transmission apparatus 1201 and a protocol frame parsing apparatus 1202.

The protocol frame transmission apparatus 1201 is configured to encapsulate one protocol frame into at least one Transmission Control Protocol TCP data packet, where the last TCP data packet in the at least one TCP data packet may include indication information, and the indication information may be used to indicate that the last TCP data packet is the last TCP data packet corresponding to the protocol frame.

The protocol frame transmission apparatus 1201 is further configured to send the at least one TCP data packet to the protocol frame parsing apparatus 1202.

The protocol frame parsing apparatus 1202 is configured to determine, according to the indication information, a start TCP data packet corresponding to a next protocol frame.

The protocol frame parsing apparatus 1202 is further configured to perform data parsing on the next protocol frame from the start TCP data packet.

The protocol frame parsing apparatus 1202 is further configured to send a TCP data packet obtained after the data parsing to a node device 1204.

In an optional embodiment, when a data part length of the last TCP data packet is 0, the protocol frame parsing apparatus 1202 determines that a next TCP data packet is the start TCP data packet corresponding to the next protocol frame.

Further optionally, a header of the last TCP data packet may include a sending sequence number and an acknowledgement sequence number. The sending sequence number is the same as a sending sequence number of the start TCP data packet corresponding to the next protocol frame, and the acknowledgement sequence number is determined according to received data sent by the node device.

Further optionally, a header of the last TCP data packet may include a sending sequence number and an acknowledgement sequence number. The sending sequence number is the same as a sending sequence number of the start TCP data packet corresponding to the next protocol frame, and the acknowledgement sequence number is the same as an acknowledgement sequence number of a previous data packet of the last TCP data packet.

Further optionally, before encapsulating the protocol frame into the at least one TCP data packet, the protocol frame transmission apparatus 1201 may further perform the following operation:
obtaining the protocol frame sent by a management terminal 1203, where the protocol frame includes terminal identification information, and the terminal identification information is used to instruct to send the at least one TCP data packet corresponding to the protocol frame to the node device corresponding to the terminal identification information.

Further optionally, the encapsulating, by the protocol frame transmission apparatus 1201, one protocol frame into at least one TCP data packet may be specifically:
when a data volume of the last TCP data packet that is corresponding to the protocol frame and that includes data is equal to a preset MSS, adding one TCP data packet after the last TCP data packet that includes data, where a data part length of the added TCP data packet is 0.

In an optional embodiment, when a data volume of the last TCP data packet that is corresponding to the protocol frame and that includes data is less than a preset MSS, the last TCP data packet that includes data includes only data of the protocol frame, and the indication information is the data volume of the last TCP data packet that includes data. When the data volume of the last TCP data packet is less than the preset MSS, the protocol frame parsing apparatus 1202 may determine that a next TCP data packet is the start TCP data packet corresponding to the next protocol frame.

In an optional embodiment, the indication information may be identification information included in a header of the last TCP data packet. When the header of the last TCP data packet includes the identification information, the protocol frame parsing apparatus 1202 may determine that a next TCP data packet is the start TCP data packet corresponding to the next protocol frame.

In an optional embodiment, a data part of the at least one TCP data packet includes only data of the protocol frame.

In an optional embodiment, before sending the at least one TCP data packet to the protocol frame parsing apparatus 1202, the protocol frame transmission apparatus 1201 may further perform the following operation:
receiving, by the protocol frame transmission apparatus 1201, a TCP data packet sent by the protocol frame parsing apparatus 1202.

Further, the encapsulating, by the protocol frame transmission apparatus 1201, one protocol frame into at least one TCP data packet may be specifically:
adding, to a to-be-sent TCP data packet in the at least one TCP data packet, an acknowledgement sequence number of the TCP data packet sent by the node device, where the acknowledgement sequence number is used to indicate that the TCP data packet sent by the node device is correctly received.

After receiving the at least one TCP data packet sent by the protocol frame transmission apparatus 1201, the protocol frame parsing apparatus 1202 may further perform the following operation:
when the received TCP data packet carries the acknowledgement sequence number of the TCP data packet sent to the protocol frame transmission apparatus 1201, determining, according to the acknowledgement sequence number, that the protocol frame transmission apparatus 1201 correctly receives the TCP data packet sent by the protocol frame parsing apparatus 1202.

In an optional embodiment, before encapsulating the protocol frame into the at least one TCP data packet, the protocol frame transmission apparatus 1201 may further perform the following operation:
sending a notification message to the node device 1204, where the notification message is used to indicate that the last TCP data packet in the at least one TCP data packet includes the indication information, and the indication information is used to indicate that the last TCP data packet is the last TCP data packet corresponding to the protocol frame.

Further optionally, the notification message is carried in an HTTP 2.0 setting frame or an HTTP 2.0 header field of the protocol frame.

In an optional embodiment, before determining, according to the indication information, the start TCP data packet corresponding to the next protocol frame, the protocol frame parsing apparatus 1202 may further perform the following operations:
receiving the notification message sent by the protocol frame transmission apparatus 1201; and
obtaining, according to the notification message, the indication information in the last TCP data packet corresponding to the protocol frame.

In an optional embodiment, a header of the at least one TCP data packet includes data type information, and the data type information is used to indicate a data type of the data part of the TCP data packet. The performing, by the protocol frame parsing apparatus 1202, data parsing on the next protocol frame from the start TCP data packet may be specifically:
obtaining the data type of the data part of the TCP data packet according to the data type information.

In an optional embodiment, the protocol frame is a TLS frame or an HTTP frame.

In an optional embodiment, before performing data parsing on the next protocol frame from the start TCP data packet, the protocol frame parsing apparatus 1202 may further perform the following operation:
determining that a header field of the next protocol frame is compressed by using a static table.

In an optional embodiment, all TCP data packets corresponding to the next protocol frame belong to a same HTPP 2.0 stream, and after performing data parsing on the next protocol frame from the start TCP data packet, the protocol frame parsing apparatus 1202 may further perform the following operation:
when data parsing performed on the next protocol frame fails, suspending data parsing performed on a protocol frame included in the HTTP 2.0 stream.

In an optional embodiment, before encapsulating the protocol frame into the at least one TCP data packet, the protocol frame transmission apparatus 1201 may further perform the following operation:
compressing the protocol frame into at least one compressed package, where the at least one compressed package includes only the protocol frame.

In the protocol frame transmission system shown in FIG. 12, the protocol frame transmission apparatus 1201 encapsulates the protocol frame into the at least one Transmission Control Protocol TCP data packet, where the last TCP data packet in the at least one TCP data packet includes the indication information, and the indication information is used to indicate that the last TCP data packet is the last TCP data packet corresponding to the protocol frame; the protocol frame transmission apparatus 1201 sends the at least one TCP data packet to the protocol frame parsing apparatus 1202; and the protocol frame parsing apparatus 1202 determines, according to the indication information, the start TCP data packet corresponding to the next protocol frame, and then performs data parsing on the next protocol frame from the start TCP data packet. In this way, it can be ensured that a data part of one TCP data packet includes data of only one protocol frame, so that the protocol frame parsing apparatus 1202 effectively recognizes a boundary of a next protocol frame, to perform data parsing on the next protocol frame.

In descriptions in this specification, descriptions about such reference terms as "an embodiment", "some embodiments", "an example", "a specific example", and "some examples" mean that specific features, structures, materials, or characteristics described with reference to the embodiments or examples are included in at least one embodiment or example of the present invention. In this specification, the foregoing example expressions of the terms are not necessarily with respect to a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in this specification, provided that they do not conflict with each other.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one such feature. In the descriptions about the present invention, "multiple" means at least two, for example, two or three, unless otherwise specifically limited.

Descriptions about any process or method described in a flowchart or in another manner herein may be understood as indicating that one or more modules, segments, or parts of code of an executable instruction that is used to implement a specific logical function or a step of a process are included, the scope of implementations of the present invention includes other implementation, and functions may be performed in a sequence other than a shown or discussed sequence, including in a basically simultaneous manner or a reverse sequence according to the functions concerned. This should be understood by a person skilled in the technological field to which the embodiments of the present invention belong.

Logic and/or steps shown in the flowcharts or described herein in other manners, for example, may be considered as a program list of executable instructions that are used to implement logical functions, and may be specifically implemented on any computer-readable medium, for an instruction execution system, apparatus, or device (for example, a computer-based system, a system including a processor, or another system that can fetch instructions from the instruction execution system, apparatus, or device and execute the instructions) to use, or for a combination of the instruction execution system, apparatus, or device to use. In terms of this specification, the "computer-readable medium" may be any apparatus that may include, store, communicate, propagate, or transmit programs, for the instruction execution system, apparatus, or device to use, or for a combination of the instruction execution system, apparatus, or device to use. More specific examples (this list is not exhaustive) of the computer-readable medium include the following: an electrical portion (an electrical apparatus) with one or more buses, a portable computer cartridge (an magnetic apparatus), a random-access memory (RAM), a read-only memory (ROM), an electrically erasable programmable read-only memory (EPROM or flash memory), an optical fiber apparatus, and a compact disc read-only memory (CDROM). In addition, the computer-readable medium may even be a piece of paper on which the programs can be printed or another appropriate medium, because, for example, optical scanning may be performed on the paper or the another medium, then processing, such as edition, decoding, or another appropriate means when necessary, may be performed to obtain the programs in an electrical manner, and then the programs are stored in a computer memory.

It should be understood that, parts in the present invention may be implemented by using hardware, software, firmware, or a combination thereof. In the foregoing implementations, multiple steps or methods may be implemented by using software or firmware that is stored in a memory and that is executed by an appropriate instruction execution system. For example, if hardware is used for implementation, being similar to implementation in another implementation, any one or a combination of the following well-known technologies in the art may be used for implementation: a discrete logic circuit having a logic gate circuit that is used to implement a logical function for a data signal, an application-specific integrated circuit having an appropriate combinatorial logic circuit, a programmable gate array (PGA), a field programmable gate array (FPGA), or the like.

A person of ordinary skill in the art may understand that all or some of the steps of the method embodiments may be implemented by a program instructing relevant hardware. The program may be stored in a computer readable storage medium. When the program runs, one or a combination of the steps of the method embodiments is performed.

In addition, functional units in the embodiments of the present invention may be integrated into one processing module, or each of the units may exist alone physically, or two or more units may be integrated into one module. The integrated module may be implemented in a form of hardware, or may be implemented in a form of a software functional module. When the integrated module is implemented in the form of a software functional module and sold or used as an independent product, the integrated unit may be stored in a computer-readable storage medium.

The foregoing storage medium may be a read-only memory, a magnetic disk or an optical disk. Although the embodiments of the present invention are shown and described above, it can be understood that, the foregoing embodiments are examples, and cannot be construed as a limitation to the present invention. Within the scope of the present invention, a person of ordinary skill in the art may make changes, modifications, replacement, and variations to the foregoing embodiments.

## Claims

1. A protocol frame transmission method, comprising:
encapsulating one protocol frame into at least one Transmission Control Protocol TCP data packet, wherein the last TCP data packet in the at least one TCP data packet comprises indication information, and the indication information is used to indicate that the last TCP data packet is the last TCP data packet corresponding to the protocol frame; and
sending the at least one TCP data packet to a node device.

2. The method according to claim 1, wherein a data part length of the last TCP data packet is 0, to indicate that the last TCP data packet is the last TCP data packet corresponding to the protocol frame.

3. The method according to claim 2, wherein a header of the last TCP data packet comprises a sending sequence number and an acknowledgement sequence number; and
the sending sequence number is the same as a sending sequence number of a start TCP data packet corresponding to a next protocol frame, and the acknowledgement sequence number is determined according to received data sent by the node device.

4. The method according to claim 2, wherein a header of the last TCP data packet comprises a sending sequence number and an acknowledgement sequence number; and
the sending sequence number is the same as a sending sequence number of a start TCP data packet corresponding to a next protocol frame, and the acknowledgement sequence number is the same as an acknowledgement sequence number of a previous data packet of the last TCP data packet.

5. The method according to claim 4, before the encapsulating one protocol frame into at least one TCP data packet, further comprising:
obtaining the protocol frame sent by a management terminal, wherein the protocol frame comprises terminal identification information, and the terminal identification information is used to instruct to send the at least one TCP data packet corresponding to the protocol frame to the node device corresponding to the terminal identification information.

6. The method according to any one of claims 2 to 5, wherein the encapsulating one protocol frame into at least one TCP data packet comprises:
adding one TCP data packet after the last TCP data packet that is corresponding to the protocol frame and that comprises data, wherein a data part length of the added TCP data packet is 0.

7. The method according to claim 1, wherein the encapsulating one protocol frame into at least one TCP data packet comprises:
when a data volume of the last TCP data packet that is corresponding to the protocol frame and that comprises data is less than a preset MSS, the last TCP data packet that comprises data comprises only data of the protocol frame, and the indication information is the data volume of the last TCP data packet that comprises data.

8. The method according to claim 1, wherein the indication information is identification information comprised in a header of the last TCP data packet.

9. The method according to any one of claims 1 to 8, wherein a data part of the at least one TCP data packet comprises only data of the protocol frame.

10. The method according to any one of claims 1 to 9, before the sending the at least one TCP data packet to a node device, further comprising:
receiving a TCP data packet sent by the node device, wherein
the encapsulating one protocol frame into at least one TCP data packet comprises:
adding, to a to-be-sent TCP data packet in the at least one TCP data packet, an acknowledgement sequence number of the TCP data packet sent by the node device, wherein the acknowledgement sequence number is used to indicate that the TCP data packet sent by the node device is correctly received.

11. The method according to any one of claims 1 to 10, before the encapsulating one protocol frame into at least one TCP data packet, further comprising:
sending a notification message to the node device, wherein the notification message is used to indicate that the last TCP data packet in the at least one TCP data packet comprises the indication information, and the indication information is used to indicate that the last TCP data packet is the last TCP data packet corresponding to the protocol frame.

12. The method according to claim 11, wherein the notification message is carried in an HTTP 2.0 setting frame or an HTTP 2.0 header field of the protocol frame.

13. The method according to any one of claims 1 to 12, wherein a header of the at least one TCP data packet comprises data type information, and the data type information is used to indicate a data type of the data part of the TCP data packet.

14. The method according to any one of claims 1 to 13, wherein the protocol frame is a Transport Layer Security TLS frame or a Hypertext Transfer Protocol HTTP frame.

15. The method according to any one of claims 1 to 14, before the encapsulating one protocol frame into at least one TCP data packet, further comprising:
compressing the protocol frame into at least one compressed package, wherein the at least one compressed package comprises only the protocol frame.

16. A protocol frame parsing method, comprising:
receiving at least one TCP data packet that is sent by a node device and that is obtained by encapsulating one protocol frame, wherein the last TCP data packet in the at least one TCP data packet comprises indication information, and the indication information is used to indicate that the last TCP data packet is the last TCP data packet corresponding to the protocol frame;
determining, according to the indication information, a start TCP data packet corresponding to a next protocol frame; and
performing data parsing on the next protocol frame from the start TCP data packet.

17. The method according to claim 16, wherein the determining, according to the indication information, a start TCP data packet corresponding to a next protocol frame comprises:
when a data part length of the last TCP data packet is 0, determining that a next TCP data packet is the start TCP data packet corresponding to the next protocol frame.

18. The method according to claim 16, wherein the determining, according to the indication information, a start TCP data packet corresponding to a next protocol frame comprises:
when a data volume of the last TCP data packet is less than a preset MSS, determining that a next TCP data packet is the start TCP data packet corresponding to the next protocol frame.

19. The method according to claim 16, wherein the determining, according to the indication information, a start TCP data packet corresponding to a next protocol frame comprises:
when a header of the last TCP data packet comprises identification information, determining that a next TCP data packet is the start TCP data packet corresponding to the next protocol frame.

20. The method according to any one of claims 16 to 19, before the receiving at least one TCP data packet that is sent by a node device and that is obtained by encapsulating one protocol frame, further comprising:
sending a TCP data packet to the node device; and
after the receiving at least one TCP data packet that is sent by a node device and that is obtained by encapsulating one protocol frame, further comprising:
when the received TCP data packet carries an acknowledgement sequence number of the TCP data packet sent to the node device, determining, according to the acknowledgement sequence number, that the node device correctly receives the TCP data packet sent to the node device.

21. The method according to any one of claims 16 to 20, before the determining, according to the indication information, a start TCP data packet corresponding to a next protocol frame, further comprising:
receiving a notification message sent by the node device; and
obtaining, according to the notification message, the indication information in the last TCP data packet corresponding to the protocol frame.

22. The method according to any one of claims 16 to 21, wherein a header of the at least one TCP data packet comprises data type information; and
the performing data parsing on the next protocol frame from the start TCP data packet comprises:
obtaining a data type of a data part of the TCP data packet according to the data type information.

23. The method according to any one of claims 16 to 22, before the performing data parsing on the next protocol frame from the start TCP data packet, further comprising:
determining that a header field of the next protocol frame is compressed by using a static table.

24. The method according to any one of claims 16 to 23, wherein all TCP data packets corresponding to the next protocol frame belong to a same HTPP 2.0 stream; and
after the performing data parsing on the next protocol frame from the start TCP data packet, the method further comprises:
when data parsing performed on the next protocol frame fails, suspending data parsing performed on a protocol frame comprised in the HTTP 2.0 stream.

25. A protocol frame transmission apparatus, comprising:
an encapsulation unit, configured to encapsulate one protocol frame into at least one TCP data packet, wherein the last TCP data packet in the at least one TCP data packet comprises indication information, and the indication information is used to indicate that the last TCP data packet is the last TCP data packet corresponding to the protocol frame; and
a sending unit, configured to send the at least one TCP data packet to a node device.

26. The apparatus according to claim 25, wherein a data part length of the last TCP data packet is 0, to indicate that the last TCP data packet is the last TCP data packet corresponding to the protocol frame.

27. The apparatus according to claim 26, wherein a header of the last TCP data packet comprises a sending sequence number and an acknowledgement sequence number; and
the sending sequence number is the same as a sending sequence number of a start TCP data packet corresponding to a next protocol frame, and the acknowledgement sequence number is determined according to received data sent by the node device.

28. The apparatus according to claim 26, wherein a header of the last TCP data packet comprises a sending sequence number and an acknowledgement sequence number; and
the sending sequence number is the same as a sending sequence number of a start TCP data packet corresponding to a next protocol frame, and the acknowledgement sequence number is the same as an acknowledgement sequence number of a previous data packet of the last TCP data packet.

29. The apparatus according to claim 28, further comprising:
an obtaining unit, configured to: before the encapsulation unit encapsulates the protocol frame into the at least one TCP data packet, obtain the protocol frame sent by a management terminal, wherein the protocol frame comprises terminal identification information, and the terminal identification information is used to instruct to send the at least one TCP data packet corresponding to the protocol frame to the node device corresponding to the terminal identification information.

30. The apparatus according to any one of claims 26 to 29, wherein
the encapsulation unit is configured to add one TCP data packet after the last TCP data packet that is corresponding to the protocol frame and that comprises data, wherein a data part length of the added TCP data packet is 0.

31. The apparatus according to claim 25, wherein
when a data volume of the last TCP data packet that is corresponding to the protocol frame and that comprises data is less than a preset MSS, the last TCP data packet that comprises data comprises only data of the protocol frame, and the indication information is the data volume of the last TCP data packet that comprises data.

32. The apparatus according to claim 25, wherein the indication information is identification information comprised in a header of the last TCP data packet.

33. The apparatus according to any one of claims 25 to 32, wherein a data part of the at least one TCP data packet comprises only data of the protocol frame.

34. The apparatus according to any one of claims 25 to 33, further comprising:
a receiving unit, configured to receive a TCP data packet sent by the node device, wherein
the encapsulation unit is configured to add, to a to-be-sent TCP data packet in the at least one TCP data packet, an acknowledgement sequence number of the TCP data packet sent by the node device, wherein the acknowledgement sequence number is used to indicate that the TCP data packet sent by the node device is correctly received.

35. The apparatus according to any one of claims 25 to 34, wherein
the sending unit is further configured to send a notification message to the node device before the encapsulation unit encapsulates the protocol frame into the at least one TCP data packet, wherein the notification message is used to indicate that the last TCP data packet in the at least one TCP data packet comprises the indication information, and the indication information is used to indicate that the last TCP data packet is the last TCP data packet corresponding to the protocol frame.

36. The apparatus according to claim 35, wherein the notification information is carried in an HTTP 2.0 setting frame or an HTTP 2.0 header field of the protocol frame.

37. The apparatus according to any one of claims 25 to 36, wherein a header of the at least one TCP data packet comprises data type information, and the data type information is used to indicate a data type of the data part of the TCP data packet.

38. The apparatus according to any one of claims 25 to 37, wherein the protocol frame is a TLS frame or an HTTP frame.

39. The apparatus according to any one of claims 25 to 38, further comprising:
a compression unit, configured to compress the protocol frame into at least one compressed package before the encapsulation unit encapsulates the protocol frame into the at least one TCP data packet, wherein the at least one compressed package comprises only the protocol frame.

40. A node device, comprising a processor, a memory, and a network interface, wherein the memory stores a set of program code, and the processor is configured to invoke the program code stored in the memory, to perform the following operations:
encapsulating one protocol frame into at least one Transmission Control Protocol TCP data packet, wherein the last TCP data packet in the at least one TCP data packet comprises indication information, and the indication information is used to indicate that the last TCP data packet is the last TCP data packet corresponding to the protocol frame; and
sending the at least one TCP data packet to a node device.

41. A protocol frame parsing apparatus, comprising:
a receiving unit, configured to receive at least one TCP data packet that is sent by a node device and that is obtained by encapsulating one protocol frame, wherein the last TCP data packet in the at least one TCP data packet comprises indication information, and the indication information is used to indicate that the last TCP data packet is the last TCP data packet corresponding to the protocol frame;
a determining unit, configured to determine, according to the indication information, a start TCP data packet corresponding to a next protocol frame; and
a parsing unit, configured to perform data parsing on the next protocol frame from the start TCP data packet.

42. The apparatus according to claim 41, wherein
the determining unit is configured to: when a data part length of the last TCP data packet is 0, determine that a next TCP data packet is the start TCP data packet corresponding to the next protocol frame.

43. The apparatus according to claim 41, wherein
the determining unit is configured to: when a data volume of the last TCP data packet is less than a preset MSS, determine that a next TCP data packet is the start TCP data packet corresponding to the next protocol frame.

44. The apparatus according to claim 41, wherein
the determining unit is configured to: when a header of the last TCP data packet comprises identification information, determine that a next TCP data packet is the start TCP data packet corresponding to the next protocol frame.

45. The apparatus according to any one of claims 41 to 44, further comprising:
a sending unit, configured to send a TCP data packet to the node device before the receiving unit receives the at least one TCP data packet sent by the node device, wherein
the determining unit is further configured to: when the received TCP data packet carries an acknowledgement sequence number of the TCP data packet sent to the node device, determine, according to the acknowledgement sequence number, that the node device correctly receives the TCP data packet sent to the node device.

46. The apparatus according to any one of claims 41 to 45, wherein
the receiving unit is further configured to: before the determining unit determines, according to the indication information, the start TCP data packet corresponding to the next protocol frame, receive a notification message sent by the node device; and
the apparatus further comprises:
an obtaining unit, configured to obtain, according to the notification information, the indication information in the last TCP data packet corresponding to the protocol frame.

47. The apparatus according to any one of claims 41 to 46, wherein a header of the at least one TCP data packet comprises data type information; and
the parsing unit is configured to obtain a data type of a data part of the TCP data packet according to the data type information.

48. The apparatus according to any one of claims 41 to 47, wherein
the determining unit is further configured to: before the parsing unit performs data parsing on the next protocol frame from the start TCP data packet, determine that a header field of the next protocol frame is compressed by using a static table.

49. The apparatus according to any one of claims 41 to 48, wherein all TCP data packets corresponding to the next protocol frame belong to a same HTTP 2.0 stream; and
the protocol frame transmission apparatus further comprises:
a control unit, configured to: after the parsing unit performs data parsing on the next protocol frame from the start TCP data packet, when data parsing performed on the next protocol frame fails, suspend data parsing performed on a protocol frame comprised in the HTTP 2.0 stream.

50. A node device, comprising a processor, a memory, and a network interface, wherein the memory stores a set of program code, and the processor is configured to invoke the program code stored in the memory, to perform the following operations:
receiving at least one TCP data packet that is sent by a node device and that is obtained by encapsulating one protocol frame, wherein the last TCP data packet in the at least one TCP data packet comprises indication information, and the indication information is used to indicate that the last TCP data packet is the last TCP data packet corresponding to the protocol frame;
determining, according to the indication information, a start TCP data packet corresponding to a next protocol frame; and
performing data parsing on the next protocol frame from the start TCP data packet.

51. A protocol frame transmission system, comprising the protocol frame transmission apparatus according to any one of claims 25 to 39 and the protocol frame parsing apparatus according to any one of claims 41 to 49.
